# EUROPEAN PATENT APPLICATION

(11) **EP 4 246 641 A1**
(43) Date of publication of application: **20.09.2023**
(21) Application number: 23162006.3
(22) Date of filing: 15.03.2023
(51) Int. Cl.: H01M 10/0525, H01M 10/0567, H01M 10/42

(54) **ELECTROLYTE, AS WELL AS ELECTROCHEMICAL APPARATUS AND ELECTRONIC APPARATUS CONTAINING THE SAME**

(30) Priority: 16.03.2022 CN 202210254841
(71) Applicant: Ningde Amperex Technology Ltd., Ningde City, Fujian 352100 (CN)
(72) Inventor: CUI, Hui, Ningde City, Fujian Province, People's Republic of China, 352100 (CN); LIU, Jian, Ningde City, Fujian Province, People's Republic of China, 352100 (CN); PENG, Xiexue, Ningde City, Fujian Province, People's Republic of China, 352100 (CN); TANG, Chao, Ningde City, Fujian Province, People's Republic of China, 352100 (CN)
(74) Representative: Icosa

(57) **Abstract**

An electrolyte includes a first composition and a second composition. The first composition includes at least one of a compound shown in formula I-A, a compound shown in formula I-B, or a compound shown in formula I-C, and the second composition includes a compound shown in formula II. A¹¹ to A¹⁶, R¹¹ to R¹⁷, R²¹ to R²², L, and n are separately defined in this specification. The electrolyte can make the electrochemical apparatus and the electronic apparatus have both significantly improved high-temperature resistance performance and safety performance.

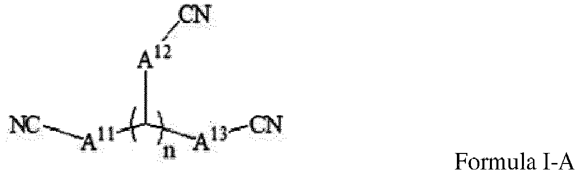

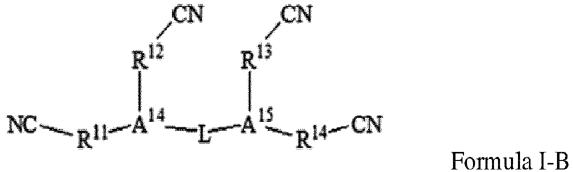

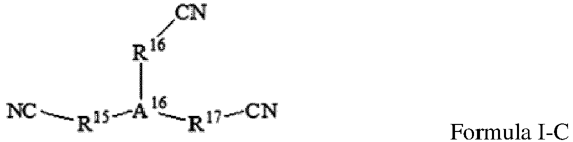

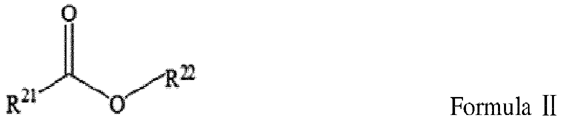

## Description

### TECHNICAL FIELD

This application relates to the field of electrochemical technologies, and in particular to an electrolyte, and an electrochemical apparatus and an electronic apparatus containing the same.

### BACKGROUND

Lithium-ion batteries are widely used in the field of consumer electronics such as smart wearable devices, smart phones, drones, and laptops, as well as the field of electric vehicles, due to advantages of high working voltage, high energy density, low self-discharge rate, small size, light weight, and environmental friendliness. With development of modern information technologies and increasingly expanded application of the lithium-ion batteries, requirements for safety performance and high-temperature resistance performance of the lithium-ion batteries are becoming higher.

### SUMMARY

This application is intended to provide an electrolyte, and an electrochemical apparatus and an electronic apparatus containing the same. The electrolyte can make the electrochemical apparatus and the electronic apparatus have both significantly improved high-temperature resistance performance and safety performance.

A first aspect of this application provides an electrolyte including a first composition and a second composition. The first composition includes at least one of a compound shown in formula I-A, a compound shown in formula I-B, or a compound shown in formula I-C, and the second composition includes a compound shown in formula II. 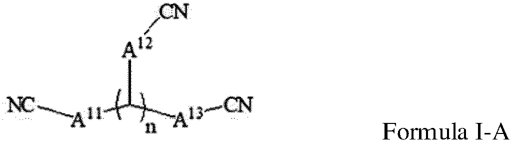 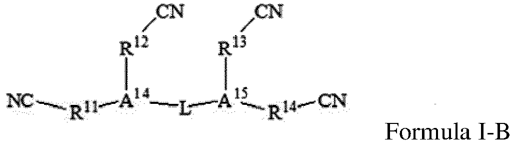 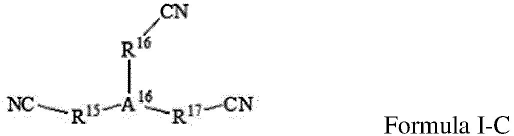 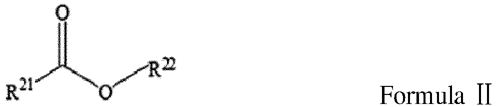 n is an integer from 1 to 8.

A¹¹, A¹², and A¹³ each independently is a group shown in A1 or A2, a structure of formula I-A includes at least two groups shown in A2, and 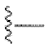 represents a connection site.

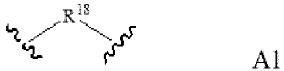

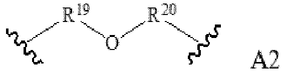

R¹⁸, R¹⁹, and R²⁰ each independently is a single bond, a C₁-C₁₀ divalent alkyl group substituted or unsubstituted by R^{a}, a C₂-C₁₀ divalent alkenyl group substituted or unsubstituted by R^{a}, a C₂-C₁₀ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a}.

A¹⁴, A¹⁵, and A¹⁶ each independently is a group shown in B1 or B2, and represents a connection site.

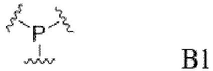

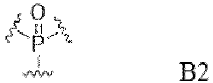

R¹¹, R¹², R¹³, R¹⁴, R¹⁵, R¹⁶, and R¹⁷ each independently is a single bond, a C₁-C₁₀ divalent alkyl group substituted or unsubstituted by R^{a}, a C₂-C₁₀ divalent alkenyl group substituted or unsubstituted by R^{a}, a C₂-C₁₀ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a}.

L is a single bond, a C₁-C₆ divalent alkyl group substituted or unsubstituted by R^{a}, a C₂-C₆ divalent alkenyl group substituted or unsubstituted by R^{a}, a C₂-C₆ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a}.

R²¹ and R²² each independently is a C₁-C₁₀ monovalent alkyl group or a C₁-C₁₀ monovalent haloalkyl group, and at least one of R²¹ or R²² is a C₁-C₁₀ monovalent haloalkyl group. Optionally, R²¹ and R²² each independently is a C₁-C₁₀ monovalent alkyl group or a C₁-C₁₀ monovalent fluoroalkyl group, and at least one of R²¹ or R²² is a C₁-C₁₀ monovalent fluoroalkyl group.

R^{a} is at least one selected from the group consisting of a halogen atom, a C₁-C₁₀ monovalent alkyl or haloalkyl group, a C₂-C₁₀ monovalent alkenyl or haloalkenyl group, a C₂-C₁₀ monovalent alkynyl or haloalkynyl group, a C₆-C₁₀ monovalent aryl or haloaryl group, a C₃-C₁₀ monovalent alicyclic or halogenated alicyclic group, a C₁-C₁₀ monovalent alicyclic or halogenated aliphatic heterocyclic group, and a C₁-C₁₀ monovalent aryl heterocyclic or halogenated aryl heterocyclic group.

In the electrolyte in this application, the first composition includes a multi-nitrile compound containing an ether bond (-O-), a phosphorus atom, or a phosphorus oxygen bond (P=O), and the second composition includes halogenated carboxylate. The inventors have accidentally found through a lot of research that when the electrolyte includes both the first composition and the second composition, the electrochemical apparatus using the electrolyte has both significantly improved high-temperature resistance performance and safety performance.

In any implementation of this application, R¹¹, R¹², R¹³, R¹⁴, R¹⁵, R¹⁶, and R¹⁷ each independently is the C₁-C₁₀ divalent alkyl group substituted or unsubstituted by R^{a}. Optionally, R¹¹, R¹², R¹³, R¹⁴, R¹⁵, R¹⁶, and R¹⁷ each independently is the following groups substituted or unsubstituted by R^{a}: -CH₂-, -C₂H₄-, -C₃H₆-, and -C₄H₈-.

In any implementation of this application, R¹¹, R¹², R¹³, and R¹⁴ are the same.

In any implementation of this application, at least two of R¹⁵, R¹⁶, and R¹⁷ are the same.

In any implementation of this application, L is a single bond, a C₁-C₆ divalent alkyl group, a C₂-C₆ divalent alkenyl group, or a C₂-C₆ divalent alkynyl group. Optionally, L is a single bond, -CH₂-, -C₂H₄-, -C₃H₆-, -CH=CH-, or -C=C-.

In any implementation of this application, A¹¹ and A¹³ each independently is a group shown in A1 or A2. R¹⁸ is at least one selected from the group consisting the C₁-C₁₀ divalent alkyl group substituted or unsubstituted by R^{a}, R¹⁹ and R²⁰ each independently is a single bond or a C₁-C₁₀ divalent alkyl group substituted or unsubstituted by R^{a}, and at least one of R¹⁹ or R²⁰ is not a single bond. Optionally, R¹⁸ is the following groups substituted or unsubstituted by R^{a}: -CH₂-, -C₂H₄-, -C₃H₆-, and -C₄H₈-. R¹⁹ and R²⁰ each independently is a single bond or the following groups that are substituted or unsubstituted by R^{a}: -CH₂-, -C₂H₄-, -C₃H₆-, and -C₄H₈-.

In any implementation of this application, A¹¹ and A¹³ are the same.

In any implementation of this application, A¹² is a group shown in A2. One of R¹⁹ and R²⁰ is a single bond and is connected to a C atom, and the other is a C₁-C₁₀ divalent alkyl group substituted or unsubstituted by R^{a} and is connected to -CN. Optionally, the other is the following groups substituted or unsubstituted by R^{a}: -CH₂-, -C₂H₄-, -C₃H₆-, and -C₄H₈-.

In any implementation of this application, R^{a} is at least one selected from the group consisting of a halogen atom, a C₂-C₆ univalent alkenyl or haloalkenyl group, a phenyl group, a halophenyl group, a cyclohexenyl group, and a halocyclohexenyl group.

In any implementation of this application, n is 2, 3, 4, 5, or 6. Optionally, n is 2, 3, or 4. When n is within an appropriate range, the compound shown in formula I-A has good thermal stability, and protective films formed on surfaces of a positive electrode active material and a negative electrode active material also have good electrochemical stability, so that resistance of the electrolyte on a positive electrode interface and a negative electrode interface is higher, and the electrochemical apparatus can have both significantly improved high-temperature resistance performance and safety performance.

In any implementation of this application, the first composition includes a compound shown in formula I-A and at least one of a compound shown in formula I-B or a compound shown in formula I-C. When the first composition includes both a multi-nitrile compound containing an ether bond (-O-) and a multi-nitrile compound containing a phosphorus atom or a phosphorus oxygen bond (P=O), the first composition can better improve electrochemical stability and flexibility of the positive electrode protective film and the negative electrode protective film, and better improve electrolyte resistance of the positive electrode interface and the negative electrode interface.

In any implementation of this application, the first composition includes at least one of the following compounds:

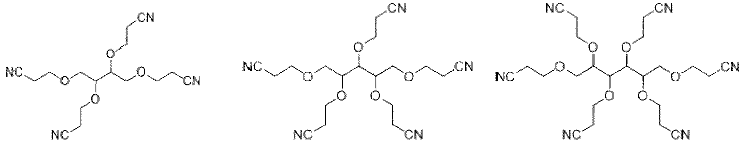

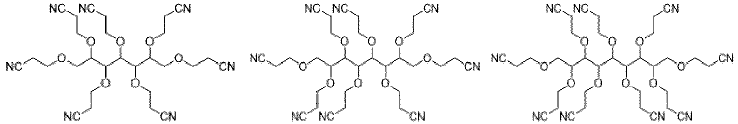

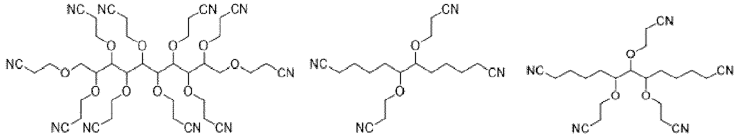

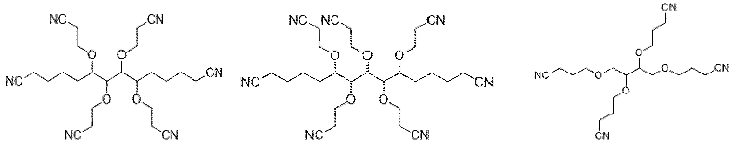

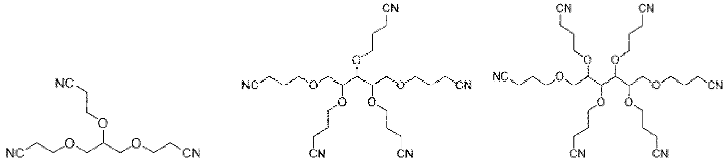

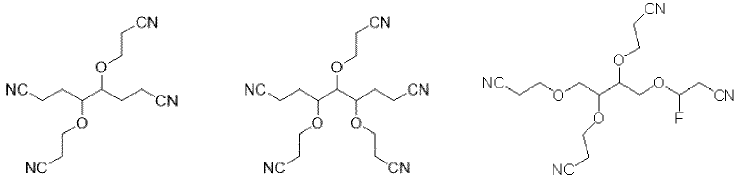

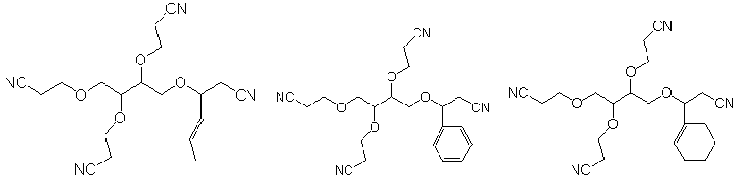

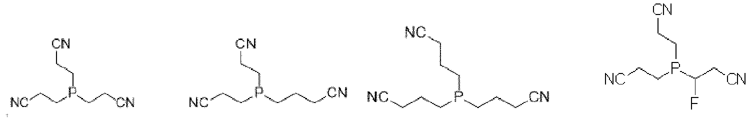

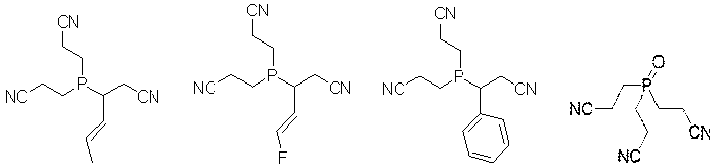

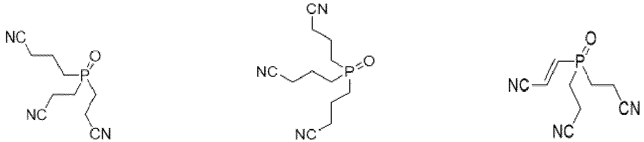

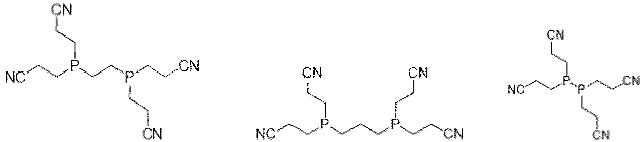

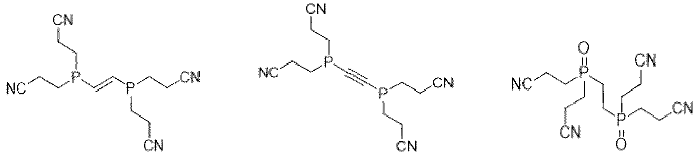

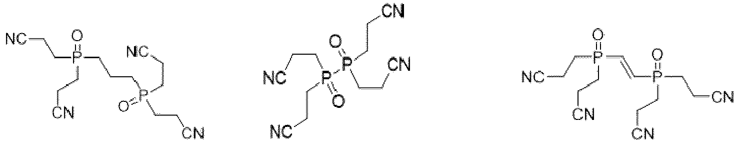

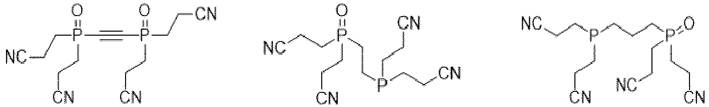

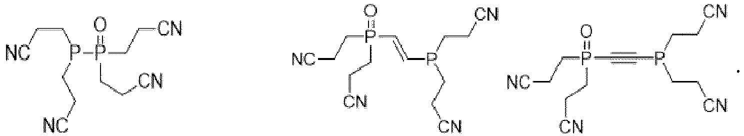

In any implementation of this application, the second composition includes at least one of the following compounds:

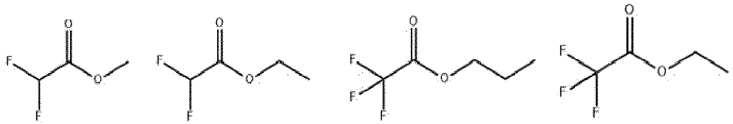

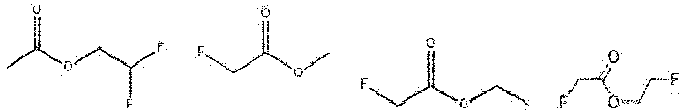

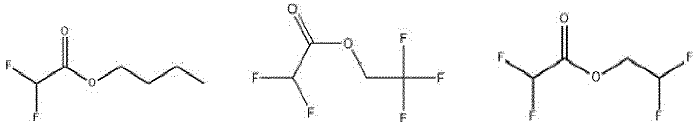

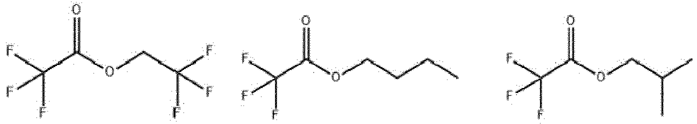

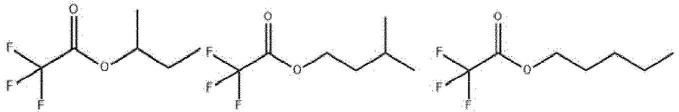

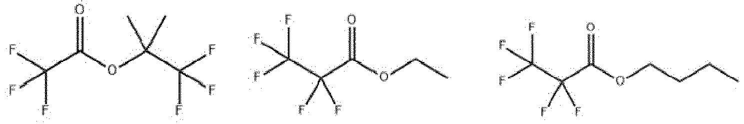

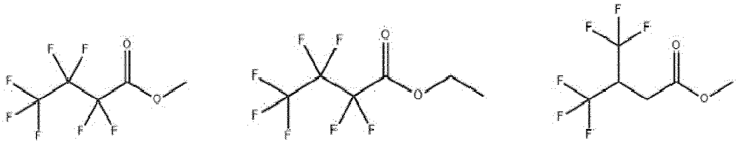

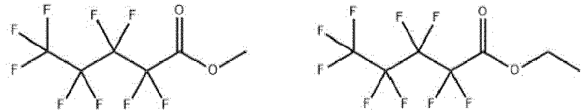

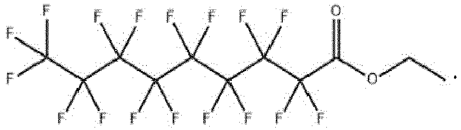

In any implementation of this application, based on a total mass of the electrolyte, a mass percentage of the first composition is X%, and 0.01≤X≤10. Optionally, 0.2≤X≤5. When the mass percentage of the first composition is within an appropriate range, the following situations can be avoided: first, when the percentage of the first composition is small, an effect of the first composition on improving thermal stability and electrochemical stability of the electrolyte is insignificant, and an effect of the first composition on improving electrolyte resistance of the positive electrode interface and the negative electrode interface is insignificant; and second, when the percentage of the first composition is large, the effect of the first composition on improving the electrolyte resistance of the positive electrode interface and the negative electrode interface does not continue to enhance, and in addition, the first composition may also cause a lithium salt in the electrolyte to precipitate or make the electrolyte turbid.

In any implementation of this application, based on the total mass of the electrolyte, a mass percentage of the second composition is Y%, and 0.01≤Y≤20. Optionally, 2≤Y≤20. When the mass percentage of the second composition is within an appropriate range, the following situations can be avoided: first, when the percentage of the second composition is small, an effect of the second composition on reducing impedance and polarization of the negative electrode is insignificant; and second, when the percentage of the second composition is large, the effect of the second composition on reducing the impedance and polarization of the negative electrode does not continue to enhance, and in addition, the second composition may also lead to a decrease of ionic conductivity of the electrolyte.

In any implementation of this application, 0.01≤X/Y≤5.0. Optionally, 0.05≤X/Y≤2.5. When a mass ratio X/Y of the first composition to the second composition is within an appropriate range, there is a better synergistic effect between the first composition and the second composition.

In any implementation of this application, the electrolyte further includes a third composition, and the third composition includes at least one of ethylene carbonate or fluoroethylene carbonate. When the electrolyte further includes the third composition, there may be a synergistic effect between the three compositions. The third composition can enhance an effect of the first composition and the second composition on stabilizing the negative electrode interface, and the first composition and the second composition can reduce oxidative decomposition of the third composition in the positive electrode. Therefore, the electrochemical apparatus using the electrolyte can have further improved high-temperature resistance performance and safety performance.

In any implementation of this application, based on a total weight of the electrolyte, a mass percentage of the third composition is C%, and 0.01<C<30. Optionally, 10≤C≤30. When the mass percentage of the third composition is within an appropriate range, the following situations can be avoided: first, when the percentage of the third composition is small, an effect of the third composition on stabilizing the negative electrode interface is insignificant; and second, when the percentage of the third composition is large, the effect of the third composition on stabilizing the negative electrode interface does not continue to enhance, and in addition, the third composition may further lead to an increase of gas production of the electrochemical apparatus.

In any implementation of this application, 1.6≤C/X≤125. Optionally, 1.6≤C/X≤36. When a mass ratio X/Y of the third composition to the first composition is within an appropriate range, there is a better synergistic effect between the two compositions.

In any implementation of this application, based on the total weight of the electrolyte, a mass percentage of the ethylene carbonate is C1%, and 0.01≤C1≤25. Optionally, 5≤C1≤25.

In any implementation of this application, based on the total weight of the electrolyte, a mass percentage of the fluoroethylene carbonate is C2%, and 0.01<C2<20. Optionally, 3≤C2≤15.

In any implementation of this application, based on the total weight of the electrolyte, the mass percentage of the ethylene carbonate is C1%, and 0.01≤C1≤25; and the mass percentage of the fluoroethylene carbonate is C2%, and 0.01<C2<20, where 0.02≤C1+C2≤30. Optionally, 5≤C1≤25, 3≤C2≤15, and 10≤C1+C2≤30.

In any implementation of this application, the electrolyte further includes at least one of a fourth composition or a fifth composition, the fourth composition includes a phosphoronitrile compound, and the fifth composition includes another compound containing P=O and P-O. When the electrolyte further includes the phosphoronitrile compound, the positive electrode interface and the negative electrode interface both have stronger electrolyte resistance, and an electrochemical apparatus using the electrolyte in this application can be further improved in electrochemical performance and safety performance in a high-temperature environment. When the electrolyte further includes another compound containing P=O and P-O, an electrochemical apparatus using the compound can be further improved in electrochemical performance and safety performance in a high-temperature environment.

In any implementation of this application, the fourth composition includes at least one of the following compounds:

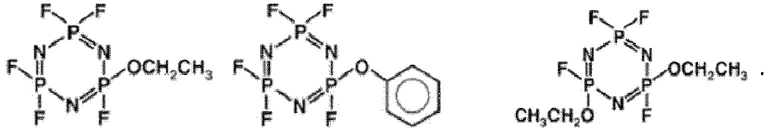

In any implementation of this application, based on the total weight of the electrolyte, a mass percentage of the fourth composition is D%, and 0.01≤D≤5. Optionally, 0.5≤D≤5. When the mass percentage of the fourth composition is within an appropriate range, the following situations can be avoided: first, when the percentage of the fourth composition is small, an effect of the fourth composition on improving stability of the positive electrode interface and the negative electrode interface is insignificant; and second, when the percentage of the fourth composition is large, the effect of the fourth composition on improving the stability of the positive electrode interface and the negative electrode interface does not continue to enhance, and in addition, the fourth composition may also increase electrode polarization.

In any implementation of this application, the fifth composition includes at least one of the following compounds: lithium difluorophosphate, lithium difluorodioxalate phosphate, lithium tetrafluorooxalate phosphate, 1,2-bis ((difluorophosphinyl)oxy) ethane, trimethyl phosphate, triphenyl phosphate, triisopropyl phosphate, 3,3,3-trifluoroethyl phosphate, 3,3,3-trifluoroethyl phosphite, tris(trimethylsilyl) phosphate, or 1-propyl phosphate anhydride.

In any implementation of this application, based on the total weight of the electrolyte, a mass percentage of the fifth composition is E%, and 0.01≤E≤5. Optionally, 0.05≤E≤1. When the mass percentage of the fifth composition is within an appropriate range, the following situations can be avoided: first, when the percentage of the fifth composition is small, an effect of the fifth composition on reducing impedance of the negative electrode is insignificant; and second, when the percentage of the fifth composition is large, the effect of the fifth composition on reducing impedance of the negative electrode does not continue to enhance, and in addition, the fifth composition may also increase electrode polarization.

A second aspect of this application provides an electrochemical apparatus, including the electrolyte according to the first aspect of this application.

A third aspect of this application provides an electronic apparatus, including the electrochemical apparatus according to the second aspect of this application.

The electrolyte of this application includes both the first composition and the second composition. Under the synergistic effect of the two compositions, the thermal stability and electrochemical stability of the electrolyte are higher, and the electrolyte resistance of the positive electrode interface and the negative electrode interface is higher, so that the electrochemical apparatus and the electronic apparatus containing the electrolyte can have both significantly improved high-temperature resistance performance and safety performance.

### DETAILED DESCRIPTION OF EMBODIMENTS

To make the objectives, technical solutions, and advantages of this application clearer, the following clearly and completely describes the technical solutions in this application with reference to the embodiments. Apparently, the described embodiments are some but not all of the embodiments of this application. The embodiments described herein are illustrative in nature and used to provide a basic understanding of this application. The embodiments of this application shall not be construed as a limitation on this application. All other embodiments obtained by persons skilled in the art based on the technical solutions provided by this application and the given embodiments without creative efforts shall fall within the protection scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or single numerical value, as a lower limit or an upper limit, may be combined with any other point or single numerical value or combined with another lower limit or upper limit to form a range not expressly recorded.

In the descriptions of this specification, "more than" or "less than" is inclusive of the present number unless otherwise specified.

Unless otherwise specified, terms used in this application have commonly known meanings generally understood by persons skilled in the art. Unless otherwise specified, numerical values of parameters mentioned in this application may be measured by using various measurement methods commonly used in the art (for example, testing may be performed by using a method provided in the embodiments of this application).

The term "about" is intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

A list of items connected by the terms "at least one of", "at least one piece of", "at least one kind of", or the like may mean any combination of the listed items. For example, if items A and B are listed, the phrase "at least one of A and B" means only A; only B; or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain a single composition or a plurality of compositions. The item B may contain a single composition or a plurality of compositions. The item C may contain a single composition or a plurality of compositions.

The term "a plurality of" means two or more than two and the term "a plurality of types" means two types or more than two types.

The term "alkyl group" means a saturated hydrocarbyl, including both straight-chain and branched structures. Examples of the alkyl group include, but are not limited to, a methyl group, an ethyl group, a propyl group (such as n-propyl group and isopropyl group), a butyl group (such as n-butyl group, isobutyl group, sec-butyl group, tert-butyl group), and an amyl group (such as n-amyl group, isopentyl group, and neopentyl group).

The term "alkenyl group" means an unsaturated hydrocarbyl containing a carbon-carbon double bond, including both straight-chain and branched structures. A quantity of carbon-carbon double bonds may be one or more. Examples of the alkenyl group include, but are not limited to, a vinyl group, a propenyl group, an allyl group, and a butadiene group.

The term "alkynyl group" means an unsaturated hydrocarbyl containing a carbon-carbon triple bond, including both straight-chain and branched structures. A quantity of carbon-carbon triple bonds may be one or more. Examples of the alkynyl group include, but are not limited to, an ethynyl group, a propynyl group, a butynyl group, and a butadiyne group.

The term "aryl group" means a cyclocarbon system with aromatic properties, whose structure may be monocyclic, polycyclic, or condensed cyclic. Examples of the aryl group include, but are not limited to, a phenyl group, a naphthyl group, and an indenyl group.

The term "heteroaryl group" means that one or more atoms in an aromatic ring are elements other than carbon, such as N, O, and S. Examples of the heteroaryl group include, but are not limited to, a pyrrolyl group, a furanyl group, a thiophenyl group, a pyridyl group, a pyrimidinyl group, a pyridazinyl group, a pyrazinyl group, a benzofuranyl group, and a benzothiophenyl group.

The term "alicyclic group" means a cyclocarbon system with aliphatic properties, including a cyclic alkyl group, alkenyl group, and alkynyl group, whose structure may be monocyclic or polycyclic (for example, condensed cyclic, bridge cyclic, spiral cyclic). Examples of the alicyclic group include, but are not limited to: a cyclopropyl group, a cyclobutyl group, a cyclopentyl group, a cyclohexyl group, a cycloheptyl group, a cyclopentenyl group, a cyclohexenyl group, a cyclohexynyl group, or the like.

The term "alicyclic heterocyclic group" means that one or more atoms in an alicyclic ring are elements other than carbon (such as N, O, and S). Examples of the aliphatic heterocyclic group include, but are not limited to, an ethylene oxide group, an azacyclopropane group, and a propionolactone group.

When each substituent group represents "monovalent", it means a group formed by removing one H atom from a molecule. When each substituent represents "divalent", it means a group formed by removing two H atoms from a molecule.

Throughout this specification, substituent groups are disclosed in groups or scopes. It is clearly expected that this description includes each individual subcombination of members of these groups and scopes. For example, it is clearly expected that the term "C₁ to C₆ divalent alkyl group" alone discloses a C₁, C₂, C₃, C₄, C₅, C₆, C₁ to C₆, C₁ to C₅, C₁ to C₄, C₁ to C₃, C₁ to C₂, C₂ to C₆, C₂ to C₅, C₂ to C₄, C₂ to C₃, C₃ to C₆, C₃ to C₅, C₃ to C₄, C₄ to C₆, C₄ to C₅, or C₅ to C₆ divalent alkyl group.

With development of modern information technologies and increasingly expanded application of the lithium-ion batteries, requirements for energy density of the lithium-ion batteries are becoming higher and higher. Increasing working voltage of lithium-ion batteries can improve energy density of the lithium-ion batteries. The most common strategy is to use a positive electrode active material with high working voltage. However, such positive electrode active material has stronger oxidizability and has more side reactions with the electrolyte, which is likely to cause dissolution of a transition metal in the positive electrode active material and swelling of the battery.

In addition, lithium-ion batteries also need to be able to adapt to a large fluctuation of an ambient temperature. For example, the lithium-ion batteries can be used normally when there is a temperature rise inside a high-rate charge/discharge battery, and have satisfactory safety performance when there is an excessive temperature rise in the batteries under mechanical, electrical, or thermal abuse.

Currently, a working temperature of the lithium-ion batteries is usually between 0°C and 40°C. When the temperature is high, battery capacity decreases rapidly, and combustion or explosion may even occur. Therefore, it is of great practical significance to improve high-temperature resistance performance and safety performance of lithium-ion batteries.

Electrolyte is one of the key factors affecting performance of lithium-ion batteries. Currently, the most widely commercialized electrolyte system is a lithium hexafluorophosphate mixed carbonate solution. However, an existing electrolyte system has poor thermal stability in a high-temperature environment, for example, lithium hexafluorophosphate is easy to decompose above 75°C, and a carbonate solvent is easy to burn or explode under a high-temperature environment due to a low boiling point and a flash point. In addition, the existing electrolyte system also has poor electrochemical stability in a high-temperature environment, and side reactions between the electrolyte and the electrode active materials is significantly increased in a high-temperature environment, which not only consumes a large quantity of lithium ions and accelerates decrease of the battery capacity, but also causes the battery to swell, even burn or explode.

Therefore, effective technical measures are needed to improve the thermal stability and electrochemical stability of the electrolyte under a high-temperature environment, and improve the high-temperature resistance performance and safety performance of the lithium-ion batteries.

### Electrolyte

A first aspect of embodiments of this application provides an electrolyte including a first composition and a second composition. The first composition includes at least one of a compound shown in formula I-A, a compound shown in formula I-B, or a compound shown in formula I-C, and the second composition includes a compound shown in formula II. 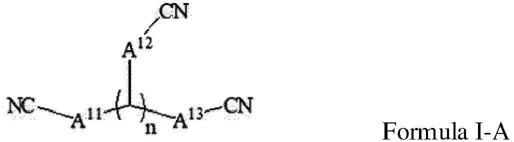 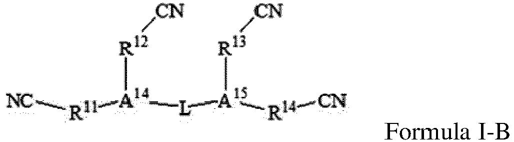 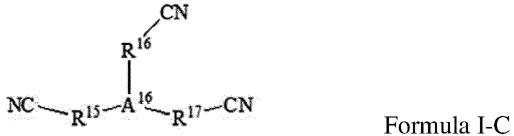 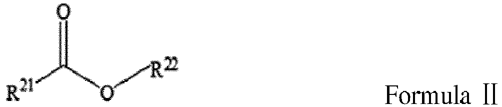 n is an integer from 1 to 8.

A¹¹, A¹², and A¹³ each independently is a group shown in A1 or A2, and a structure of formula I-A includes at least two groups shown in A2. R¹⁸, R¹⁹, and R²⁰ each independently is a single bond, a C₁-C₁₀ divalent alkyl group substituted or unsubstituted by R^{a}, a C₂-C₁₀ divalent alkenyl group substituted or unsubstituted by R^{a}, a C₂-C₁₀ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a}. 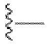 represents a connection site.

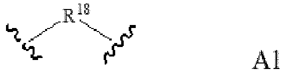

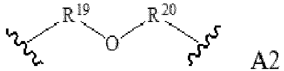

R¹¹, R¹², R¹³, R¹⁴, R¹⁵, R¹⁶, and R¹⁷ each independently is a single bond, a C₁-C₁₀ divalent alkyl group substituted or unsubstituted by R^{a}, a C₂-C₁₀ divalent alkenyl group substituted or unsubstituted by R^{a}, a C₂-C₁₀ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a}.

L is a single bond, a C₁-C₆ divalent alkyl group substituted or unsubstituted by R^{a}, a C₂-C₆ divalent alkenyl group substituted or unsubstituted by R^{a}, a C₂-C₆ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a}.

R^{a} is at least one selected from the group consisting of a halogen atom, a C₁-C₁₀ monovalent alkyl or haloalkyl group, a C₂-C₁₀ monovalent alkenyl or haloalkenyl group, a C₂-C₁₀ monovalent alkynyl or haloalkynyl group, a C₆-C₁₀ monovalent aryl or haloaryl group, a C₃-C₁₀ monovalent alicyclic or halogenated alicyclic group, a C₁-C₁₀ monovalent alicyclic or halogenated aliphatic heterocyclic group, and a C₁-C₁₀ monovalent aryl heterocyclic or halogenated aryl heterocyclic group. Optionally, R^{a} is at least one selected from the group consisting of a halogen atom, a C₂-C₆ univalent alkenyl or haloalkenyl group, a phenyl group, a halophenyl group, a cyclohexenyl group, and a halocyclohexenyl group. Further, R^{a} is a combination of one to three of the following groups: F, a C₂ to C₆ monovalent alkenyl or fluoroalkenyl group, a phenyl, a fluorophenyl group, a cyclohexenyl group, and a fluorocyclohexenyl group.

A¹⁴, A¹⁵, and A¹⁶ each independently is a group shown in B1 or B2, and 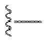 represents a connection site.

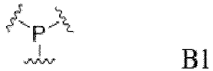

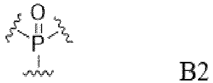

R²¹ and R²² each independently is a C₁-C₁₀ monovalent alkyl group or a C₁-C₁₀ monovalent haloalkyl group, and at least one of R²¹ or R²² is a C₁-C₁₀ monovalent haloalkyl group. Optionally, R²¹ and R²² each independently is a C₁-C₁₀ monovalent alkyl group or a C₁-C₁₀ monovalent fluoroalkyl group, and at least one of R²¹ or R²² is a C₁-C₁₀ monovalent fluoroalkyl group.

In the electrolyte in this application, the first composition includes a multi-nitrile compound containing an ether bond (-O-), a phosphorus atom, or a phosphorus oxygen bond (P=O), and the second composition includes halogenated carboxylate. The inventors have accidentally found through a lot of research that when the electrolyte includes both the first composition and the second composition, the electrochemical apparatus using the electrolyte has significantly improved high-temperature resistance performance. For example, the apparatus has a high capacity retention rate and a low thickness swelling rate after high-temperature interval cycling. In addition, safety performance, especially thermal abuse safety performance, of the electrochemical apparatus, is also significantly improved.

The first composition can form a protective film on surfaces of a positive electrode active material and a negative electrode active material to avoid direct contact between the active materials and the electrolyte, thus reducing a side reaction between the active materials and the electrolyte. The first composition includes a multi-nitrile compound. A carbon-nitrogen triple bond in a cyano group has high bond energy, so that the first composition has high stability and oxidation resistance, which helps improve thermal stability and oxidation resistance of the electrolyte. A nitrogen atom in the cyano group contains lone pair electrons and has a strong coordination capability, and can be complexed with transition metal ions (such as Ni²⁺, Co²⁺, and Mn²⁺) on the surface of the positive electrode active material, thereby further reducing erosion of the electrolyte to the positive electrode active material. The cyano group can also absorb trace moisture and HF in the electrolyte and react with the trace moisture and the HF to produce amide substances, thereby reducing corrosion of the electrolyte to the electrode and reducing gas production of the electrochemical apparatus.

A main chain structure of the first composition contains functional groups such as an ether bond (-O-), a phosphorus atom, or a phosphorus oxygen bond (P=O). These functional groups can increase solubility of the first composition in the electrolyte, so that the first composition has good compatibility with the electrolyte. These functional groups can also improve flexibility of the positive electrode protective film and the negative electrode protective film, so that the protective films can withstand a large volume change of the active material, and maintain high integrity during rapid charging and discharging. In addition, the ether bond (-O-) in the first composition can also react with trace HF and PF₅ in the electrolyte, thereby reducing erosion of the HF and the PF₅ to the positive electrode active material.

Therefore, adding the first composition into the electrolyte can form the protective films on the surfaces of the positive electrode active material and the negative electrode active material, stabilize the positive electrode interface and negative electrode interface, and improve high-temperature resistance performance of the electrochemical apparatus to a certain extent. However, the inventors of this application have found through a lot of research that when used alone, the first composition has a limited effect on improving the electrochemical performance and safety performance of the electrochemical apparatus under a high-temperature environment. In particular, a pass rate of electrochemical apparatuses in safety tests such as a thermal abuse test is still very low.

The second composition includes halogenated carboxylate which has higher thermal stability and oxidation resistance than conventional carboxylate with no halogen atom, thereby reducing decomposition of the electrolyte to produce gas. Therefore, adding the second composition into the electrolyte can improve the high-temperature resistance performance of the electrochemical apparatus to a certain extent. However, the inventors of this application have found through a lot of research that when used alone, the second composition has a limited effect on improving the electrochemical performance and safety performance of the electrochemical apparatus under a high-temperature environment. In particular, a pass rate of electrochemical apparatuses in safety tests, such as a thermal abuse test, is still very low.

The inventors have found through further research that when the electrolyte includes both the first composition and the second composition, the high-temperature resistance performance and safety performance of the electrochemical apparatus can be significantly improved. In particular, the electrochemical performance and safety performance of the electrochemical apparatus under a high-temperature environment are significantly improved. Especially, a pass rate of the electrochemical apparatus in a thermal abuse test and other safety tests is significantly increased. Without being entangled in any theory, the inventors of this application speculate that a possible reason is that when the electrolyte includes both the first composition and the second composition, there is a synergistic effect between the first composition and the second composition.

The first composition can form the protective films on the surfaces of the positive electrode active material and the negative electrode active material, stabilize the positive electrode interface and the negative electrode interface, and reduce consumption of lithium ions. However, the inventors of this application have found that the first composition is easier to subject to reduction decomposition on the surface of the negative electrode active material to form a negative electrode protective film, often resulting in high impedance of the negative electrode, thereby leading to high polarization of the negative electrode and high consumption of lithium ions. Therefore, an effect of the first composition on improving the electrochemical performance and safety performance of the electrochemical apparatus under a high-temperature environment is limited. The second composition can also participate in formation of the negative electrode protective film on the surface of the negative electrode active material, and can improve composition of the negative electrode protective film, thereby reducing the impedance and polarization of the negative electrode. Therefore, under the synergistic effect between the two compositions, the thermal stability and electrochemical stability of the electrolyte are higher, and the electrolyte resistance of the positive electrode interface and the negative electrode interface is also higher, so that the high-temperature resistance performance and safety performance of the electrochemical apparatus can be significantly improved.
n is 1, 2, 3, 4, 5, 6, 7, or 8. When n is within an appropriate range, the compound shown in formula I-A has good thermal stability, and protective films formed on surfaces of a positive electrode active material and a negative electrode active material also have high electrochemical stability, so that electrolyte resistance of the positive electrode interface and the negative electrode interface is higher, and the electrochemical apparatus can have both significantly improved high-temperature resistance performance and safety performance. In some embodiments, optionally, n is 2, 3, 4, 5, or 6. Further, n is 2, 3, or 4.

In some embodiments, the halogen atom includes at least one of F, Cl, Br, or I. Optionally, the halogen atom includes at least one of F or Cl. Further, the halogen atom includes F. A quantity of the halogen atoms is not particularly limited, and may be one, two, or more. When the quantity of halogen atoms is two or more, the plurality of halogen atoms may be the same or different.

In some embodiments, a heteroatom includes at least one of N, O, or S. A quantity of the heteroatoms is not particularly limited, and may be one, two, or more. When the quantity of the heteroatoms is two or more, the plurality of heteroatoms may be the same or different.

In some embodiments, R¹¹, R¹², R¹³, R¹⁴, R¹⁵, R¹⁶, and R¹⁷ each independently is a C₁-C₁₀ divalent alkyl group substituted or unsubstituted by R^{a}. Optionally, R¹¹, R¹², R¹³, R¹⁴, R¹⁵, R¹⁶, and R¹⁷ each independently is the following groups substituted or unsubstituted by R^{a}: -CH₂-, -C₂H₄-, -C₃H₆-, and -C₄H₈-.

In some embodiments, L is a single bond, a C₁-C₆ divalent alkyl group, a C₂-C₆ divalent alkenyl group, or a C₂-C₆ divalent alkynyl group. Optionally, L is a single bond, -CH₂-, -C₂H₄-, -C₃H₆-, -CH=CH-, or -C=C-.

In some embodiments, A¹¹ and A¹³ each independently is a group shown in A1 or A2, where R¹⁸ is a C₁-C₁₀ divalent alkyl group substituted or unsubstituted by R^{a}, R¹⁹ and R²⁰ each independently is a single bond or a C₁-C₁₀ divalent alkyl group substituted or unsubstituted by R^{a}, and at least one of R¹⁹ or R²⁰ is not a single bond. Optionally, R¹⁸ is the following groups substituted or unsubstituted by R^{a}: -CH₂-, - C₂H₄-, -C₃H₆-, and -C₄H₈-. R¹⁹ and R²⁰ each independently is a single bond, or the following groups that are substituted or unsubstituted by R^{a}: -CH₂-, -C₂H₄-, -C₃H₆-, and -C₄H₈-, and at least one of R¹⁹ or R²⁰ is not a single bond.

In some embodiments, A¹² is a group shown in A2. One of R¹⁹ and R²⁰ is a single bond and is connected to a C atom, and the other is a C₁-C₁₀ divalent alkyl group substituted or unsubstituted by R^{a} and is connected to -CN. Optionally, the other is the following groups substituted or unsubstituted by R^{a}: -CH₂-, -C₂H₄-, -C₃H₆-, and -C₄H₈-.

In some embodiments, A¹¹ is the same as A¹³.

In some embodiments, R¹¹, R¹², R¹³, and R¹⁴ are the same.

In some embodiments, at least two of R¹⁵, R¹⁶, and R¹⁷ are the same. Optionally, R¹⁵, R¹⁶, and R¹⁷ are the same.

In some embodiments, the first composition includes at least one of a compound shown in formula I-A, a compound shown in formula I-B, or a compound shown in formula I-C. When the first composition includes both a multi-nitrile compound containing an ether bond (-O-) and a multi-nitrile compound containing a phosphorus atom or a phosphorus oxygen bond (P=O), the first composition can better improve the electrochemical stability and flexibility of the positive electrode protective film and the negative electrode protective film, and better improve the electrolyte resistance of the positive electrode interface and the negative electrode interface. In this case, the electrochemical apparatus using the electrolyte in this application has further improved high-temperature resistance performance. For example, the apparatus has a higher capacity retention rate and a lower thickness swelling rate after high-temperature interval cycling. In addition, safety performance, especially thermal abuse safety performance, of the electrochemical apparatus, is also further improved.

In some embodiments, the compound shown in formula I-A includes, but is not limited to, at least one of the following compounds:

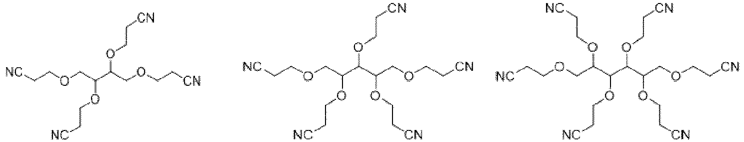

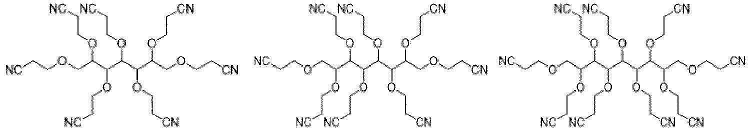

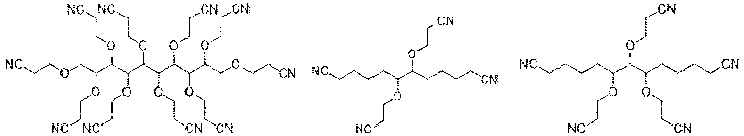

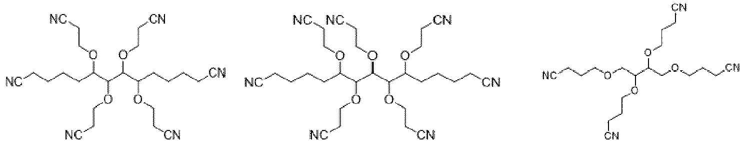

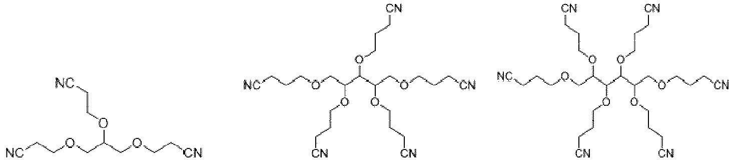

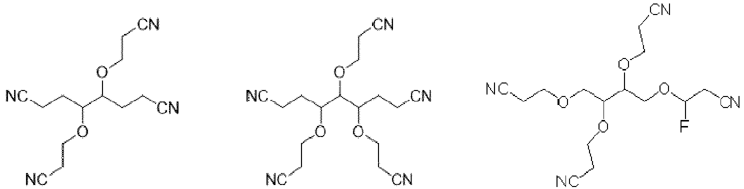

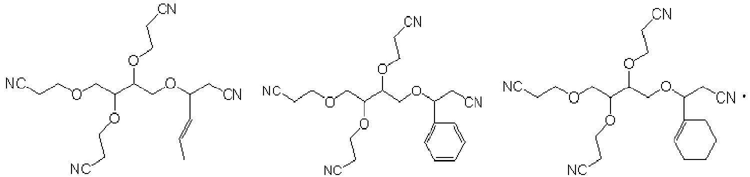

In some embodiments, the compound shown in formula I-B includes, but is not limited to, at least one of the following compounds:

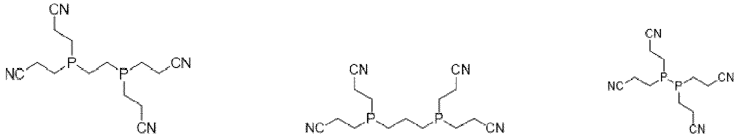

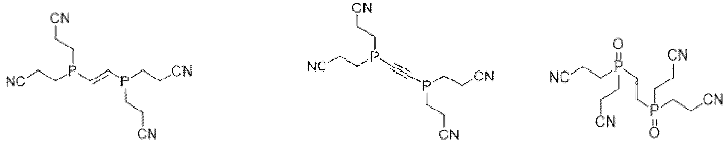

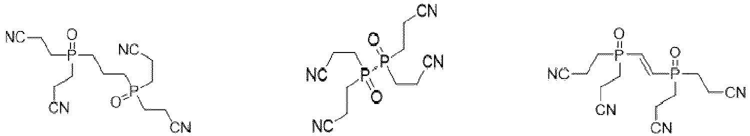

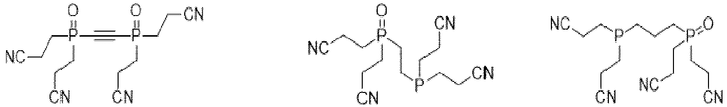

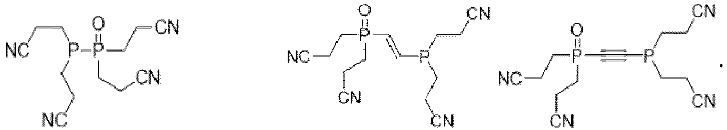

In some embodiments, the compound shown in formula I-C includes, but is not limited to, at least one of the following compounds:

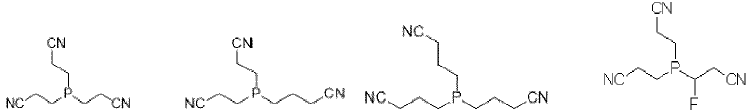

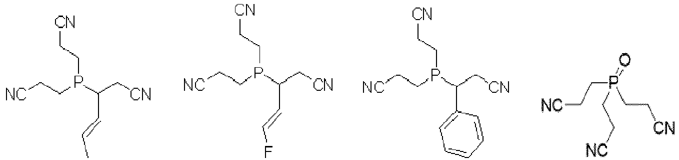

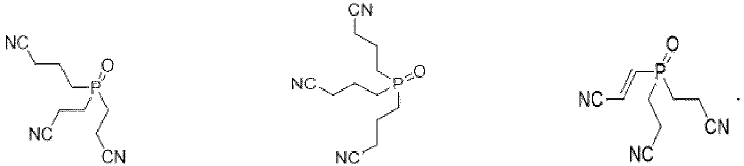

In some embodiments, the second composition includes, but is not limited to, at least one of the following compounds:

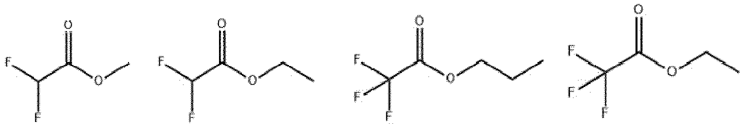

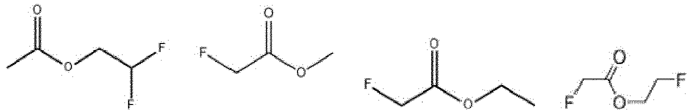

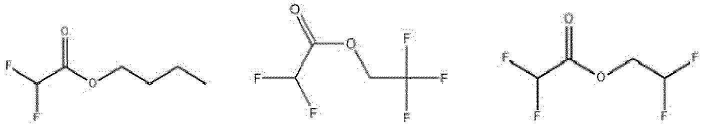

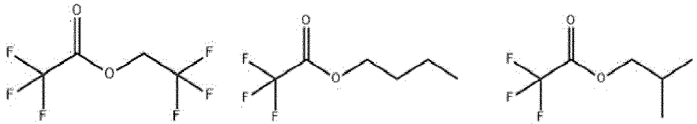

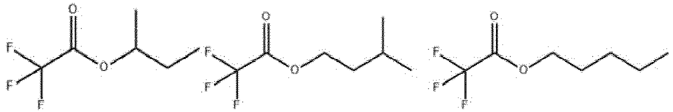

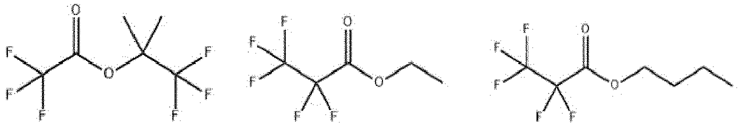

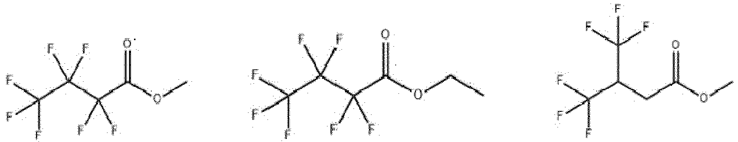

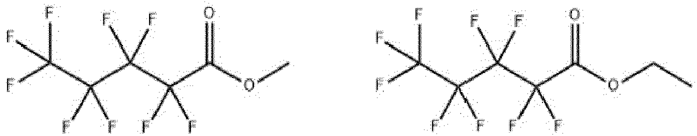

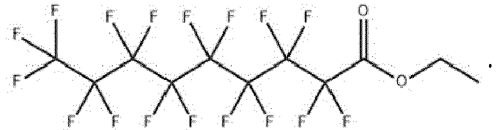

In some embodiments, based on a total mass of the electrolyte, a mass percentage of the first composition is X%, and 0.01≤X≤10. For example, X may be 0.01, 0.05, 0.1, 0.2, 0.5, 0.8, 1, 1.5, 2, 2.5, 3, 4, 5, 6, 7, 8, 9, 10, or in a range defined by any of these values. Optionally, 0.1≤X≤10, 0.1≤X≤8, 0.1≤X≤6, 0.1≤X≤5, 0.1≤X≤4, 0.1≤X≤3, 0.1≤X≤2, 0.2≤X≤10, 0.2≤X≤8, 0.2≤X≤6, 0.2≤X≤5, 0.2≤X≤4, 0.2≤X≤3, 0.2≤X≤2, 0.5≤X≤10, 0.5≤X≤8, 0.5≤X≤6, 0.5≤X≤5, 0.5≤X≤4, 0.5≤X≤3, or 0.5≤X≤2.

When the mass percentage of the first composition is within an appropriate range, the following situations can be avoided: first, when the percentage of the first composition is small, an effect of the first composition on improving the thermal stability and electrochemical stability of the electrolyte is insignificant, and an effect of the first composition on improving theelectrolyte resistance of the positive electrode interface and the negative electrode interface is insignificant; and second, when the percentage of the first composition is large, the effect of the first composition on improving the electrolyte resistance of the positive electrode interface and the negative electrode interface does not continue to enhance, and in addition, the first composition may also cause a lithium salt in the electrolyte to precipitate or make the electrolyte turbid.

In some embodiments, based on the total mass of the electrolyte, a mass percentage of the second composition is Y%, and 0.01≤Y≤20. For example, Y may be 0.01, 0.1, 0.2, 0.5, 0.8, 1, 2, 3, 4, 5, 6, 7, 8, 9, 10, 11, 12, 13, 14, 15, 16, 17, 18, 19, 20, or in a range defined by any of these values. Optionally, 0.5≤Y≤ 20, 0.5≤Y≤18, 0.5≤Y≤16, 0.5≤Y≤14, 0.5≤Y≤ 12, 0.5≤Y≤ 10, 0.5≤Y≤ 8, 0.5 ≤Y≤6, 1≤Y≤20, 1≤Y≤18, 1≤Y≤16, 1≤Y≤14, 1≤Y≤12, 1≤Y≤10, 1≤Y≤8, 1≤Y≤ 6, 2≤Y≤20, 2≤Y≤18, 2≤Y≤16, 2≤Y≤14, 2≤Y≤12, 2≤Y≤10. 2≤Y≤8, or 2≤Y≤ 6.

When the mass percentage of the second composition is within an appropriate range, the following situations can be avoided: first, when the percentage of the second composition is small, an effect of the second composition on reducing the impedance and polarization of the negative electrode is insignificant; and second, when the percentage of the second composition is large, the effect of the second composition on reducing the impedance and polarization of the negative electrode does not continue to enhance, and in addition, the second composition may also lead to a decrease of ionic conductivity of the electrolyte.

When a mass ratio of the first composition to the second composition is large, performance of the electrochemical apparatus may be affected. In some embodiments, 0.01≤X/Y≤5.0. For example, X/Y may be 0.01, 0.02, 0.05, 0.08, 0.10, 0.125, 0.15, 0.175, 0.20, 0.25, 0.30, 0.35, 0.40, 0.50, 0.60, 0.70, 0.80, 1.0, 1.25, 1.5, 2.0, 2.5, 3.0, 4.0, 5.0, or in a range defined by any of these values. Optionally, 0.05≤X/Y≤5.0, 0.05≤X/Y≤4.0, 0.05≤X/Y≤3.0, 0.05≤X/Y≤2.5, 0.05≤X/Y≤2.0, 0.05≤X/Y≤1.5, 0.10≤X/Y≤5.0, 0.10≤X/Y≤4.0, 0.10≤X/Y≤3.0, 0.10≤X/Y≤2.5, 0.10≤X/Y≤2.0, 0.10≤X/Y≤1.5, 0.125≤X/Y≤5.0, 0.125≤X/Y≤4.0, 0.125≤X/Y≤3.0, 0.125≤X/Y≤2.5, 0.125≤X/Y≤2.0, or 0.125≤X/Y≤1.5.

When the mass ratio X/Y of the first composition to the second composition is within an appropriate range, there is a better synergistic effect between the first composition and the second composition. In addition, the following situations can be avoided: first, when the mass ratio of the first composition to the second composition is small, an effect of the first composition and the second composition on improving the thermal stability and electrochemical stability of the electrolyte is insignificant, and an effect of the first composition and the second composition on improving the electrolyte resistance of the positive electrode interface and the negative electrode interface is also insignificant; and second, when the mass ratio of the first composition to the second composition is large, the second composition may not be able to effectively improve composition of the negative electrode protective film, so that the second composition may not be able to effectively reduce the impedance and polarization of the negative electrode.

In some embodiments, the electrolyte further includes a third composition, and the third composition includes at least one of ethylene carbonate (EC) or fluoroethylene carbonate (FEC). The third composition can participate in formation of the protective film on the surface of the negative electrode active material and further stabilize the negative electrode interface. A dielectric constant of the ethylene carbonate is high, which is conducive to dissociation of a lithium salt. Fluoroethylene carbonate can preferentially form a uniform, dense, and thin protective film on the surface of the negative electrode active material prior to an organic solvent, thereby inhibiting a continuous reduction reaction of the organic solvent on the negative electrode and reducing consumption of lithium ions. In addition, fluoroethylene carbonate has a higher high voltage oxidation resistance on the positive electrode, which is conducive to matching a high voltage positive electrode active material, thereby further improving energy density and cycling performance of the electrochemical apparatus, especially the cycling performance at high temperature and high voltage.

When the electrolyte further includes the third composition, there may be a synergistic effect between the three compositions. The third composition can enhance an effect of the first composition and the second composition on stabilizing the negative electrode interface, and the first composition and the second composition can reduce oxidative decomposition of the third composition in the positive electrode. Therefore, the electrochemical apparatus using the electrolyte can have further improved high-temperature resistance performance, such as a higher capacity retention rate and a lower thickness swelling rate after high-temperature interval cycling. In addition, the safety performance of the electrochemical apparatus, especially thermal abuse safety performance, can also be further improved.

In some embodiments, based on a total weight of the electrolyte, a mass percentage of the third composition is C%, and 0.01≤C≤30. For example, C may be 0.01,0.1,0.5, 1, 2, 3, 4, 5, 6, 7, 8, 9, 10, 12, 14, 16, 18, 20, 25, 30, or in a range defined by any of these values. Optionally, 1≤C≤30, 1≤C≤25, 1≤C≤ 20, 1≤C≤18, 1≤C≤16, 1≤C≤14, 3≤C≤30, 3≤C≤25, 3≤C≤20, 3≤C≤18, 3≤C≤16, 3≤C≤14, 5≤C≤30, 5≤C≤25, 5≤C≤20, 5≤C≤18, 5≤C≤16, 5≤C≤14, 10≤C≤30, 10≤C≤25, 10≤C≤20, 10≤C≤18, 10≤C≤16, or 10≤C≤ 14.

When the mass percentage of the third composition is within an appropriate range, the following situations can be avoided: first, when the percentage of the third composition is small, an effect of the third composition on stabilizing the negative electrode interface is insignificant; and second, when the percentage of the third composition is large, the effect of the third composition on stabilizing the negative electrode interface does not continue to enhance, and in addition, the third composition may further lead to an increase of gas production of the electrochemical apparatus.

In some embodiments, the third composition includes ethylene carbonate, but does not include fluoroethylene carbonate. In some embodiments, the third composition includes fluoroethylene carbonate, but does not include ethylene carbonate. In some embodiments, the third composition includes both ethylene carbonate and fluoroethylene carbonate. Optionally, the third composition includes both ethylene carbonate and fluoroethylene carbonate.

In some embodiments, based on a total weight of the electrolyte, a mass percentage of the ethylene carbonate is C1%, and 0.01≤C1≤ 25. Optionally, 5≤C1≤25.

In some embodiments, based on the total weight of the electrolyte, a mass percentage of the fluoroethylene carbonate is C2%, and 0.01≤C2≤20. Optionally, 3≤C2≤15.

In some embodiments, based on the total weight of the electrolyte, the mass percentage of the ethylene carbonate is C1%, and 0.01≤C1≤25; and the mass percentage of the fluoroethylene carbonate is C2%, and 0.01≤C2≤20, where 0.02≤C1+C2≤30. Optionally, 5≤C1≤25, 3≤C2≤15, and 10≤C1+C2≤30.

When a mass ratio of the first composition to the third composition is large, performance of the electrochemical apparatus may be affected. In some embodiments, 1.6≤C/X≤180. For example, C/X may be 1.6, 1.8, 2, 2.25, 2.5, 3, 3.5, 4, 5, 6, 7, 8, 9, 10, 12, 14, 16, 18, 24, 36, 50, 75, 90, 125, 150, 180, or in a range defined by any of these values. Optionally, 1.6≤C/X≤125, 1.6≤C/X≤90, 1.6≤C/X≤75, 1.6≤C/X≤50, 1.6≤C/X≤36, 1.6≤C/X≤18, 1.6≤C/X≤12, 1.8≤C/X≤125, 1.8≤C/X≤90, 1.8≤C/X≤75, 1.8≤C/X≤50, 1.8≤C/X≤36, 1.8≤C/X≤18, 1.8≤C/X≤12, 2≤C/X≤125, 2≤C/X≤90, 2≤C/X≤75, 2≤C/X≤50, 2≤C/X≤36, 2≤C/X≤18, or 2≤C/X≤12.

When the mass ratio of the third composition to the first composition is within an appropriate range, there is a better synergistic effect between the two compositions, so that the electrolyte resistance on the positive electrode interface and the negative electrode interface is higher, and the following situations can be avoided: first, when the mass ratio of the third composition to the first composition is small, an effect of the third composition and the first composition on improving the thermal stability and electrochemical stability of the electrolyte is insignificant, and an effect of the third composition and the first composition on improving the electrolyte resistance of the positive electrode interface and the negative electrode interface is also insignificant; and second, when the mass ratio of the third composition to the first composition is large, the third composition may not be able to effectively stabilize the negative electrode interface, and may further lead to an increase in gas production of the electrochemical apparatus.

In some embodiments, the electrolyte satisfies both 1.6≤C/X≤180 and 0.01≤X/Y≤5.0. Optionally, the electrolyte satisfies both 1.6≤C/X≤125 and 0.01≤X/Y≤5.0. Further, the electrolyte satisfies both 1.6≤C/X≤90 and 0.05≤X/Y≤2.5. Furthermore, the electrolyte satisfies both 1.6≤C/X≤36 and 0.05≤X/Y≤2.5. In this case, there is a better synergistic effect between the three compositions.

In some embodiments, the electrolyte further includes at least one of a fourth composition or a fifth composition, the fourth composition includes a phosphoronitrile compound, and the fifth composition includes another compound containing P=O and P-O. For example, in some embodiments, the electrolyte further includes the fourth composition, but does not include the fifth composition. In some embodiments, the electrolyte further includes the fifth composition, but does not include the fourth composition. In some embodiments, the electrolyte further includes both the fourth composition and the fifth composition. In this case, there may be a synergistic effect between a plurality of compositions of the electrolyte, so that the thermal stability and electrochemical stability of the electrolyte are higher, and the electrolyte resistance of the positive electrode interface and the negative electrode interface is also higher.

The phosphoronitrile compound is a kind of hybridization compound containing a -P=N- unit. A quantity of the -P=N- units may be one or more, and the plurality of -P=N- units can further form a ring structure. Optionally, the phosphoronitrile compound is a phosphoronitrile compound of a ring structure formed by the plurality of -P=N- units.

A molecular structure of the phosphoronitrile compound contains a -P=N-unit. The phosphoronitrile compound can participate in formation of a protective film on the surface of the negative electrode active material, reducing decomposition of the electrolyte, and further stabilizing the negative electrode interface. A nitrogen atom on the -P=N- unit further contains lone pair electrons and has a strong coordination capability. The nitogen atom can be complexed with transition metal ions (such as Ni²⁺, Co²⁺, and Mn²⁺) on the surface of the positive electrode active material. Therefore, the phosphoronitrile compound can also stabilize the positive electrode interface. Therefore, when the electrolyte further includes the phosphoronitrile compound, the positive electrode interface and the negative electrode interface have stronger electrolyte resistance, and the electrochemical performance and safety performance of the electrochemical apparatus using the electrolyte in this application under a high-temperature environment can be further improved.

In some embodiments, the fourth composition includes, but is not limited to, at least one of the following compounds:

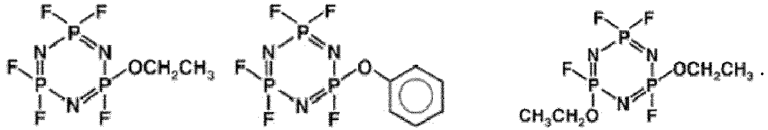

The another compound containing P=O and P-O may be a compound other than those shown in formula I-B and formula I-C. When a molecular structure of the compound contains functional groups of P-O and P=O, the compound can preferentially form a protective film on the surface of the negative electrode active material, thereby helping form a protective film with low impedance on the surface of the negative electrode active material and reduce the impedance of the nagative electrode. Therefore, when the electrolyte further includes the another compound containing P=O and P-O, the electrochemical performance and safety performance of the electrochemical apparatus using the electrolyte under a high temperature environment can be further improved.

In some embodiments, the fifth composition includes, but is not limited to, at least one of the following compounds: lithium difluorophosphate (LiPO₂F₂), lithium difluorodioxalate phosphate (LiDFOP), lithium tetrafluorooxalate phosphate (LiTFOP), 1,2-bis ((difluorophosphinyl)oxy) ethane, trimethyl phosphate, triphenyl phosphate, triisopropyl phosphate, 3,3,3-trifluoroethyl phosphate, 3,3,3-trifluoroethyl phosphite, tris(trimethylsilane) phosphate, or 1-propyl phosphate anhydride (T3P).

In some embodiments, based on the total weight of the electrolyte, a mass percentage of the fourth composition is D%, and 0.01≤D≤5. For example, D may be 0.01, 0.02, 0.05, 0.08, 0.10, 0.15, 0.20, 0.25, 0.30, 0.35, 0.40, 0.50, 0.60, 0.70, 0.80, 1, 1.5, 2, 2.5, 3, 3.5, 4, 4.5, 5, or in a range defined by any of these values. Optionally, 0.1≤D≤5, 0.1≤D≤4.5, 0.1≤D≤4, 0.1≤D≤3.5, 0.1≤D≤3, 0.1≤D≤2.5, 0.1≤D≤2, 0.1≤D≤1.5, 0.1≤D≤1, 0.2≤D≤5, 0.2≤D≤4.5, 0.2≤D≤4, 0.2≤D≤3.5, 0.2≤D≤3, 0.2≤D≤2.5, 0.2≤D≤2, 0.2≤D≤1.5, 0.2≤D≤1, 0.5≤D≤5, 0.5≤D≤4.5, 0.5≤D≤4, 0.5≤D≤3.5, 0.5≤D≤3, 0.5≤D≤2.5, 0.5≤D≤2, 0.5≤D≤1.5, or 0.5≤D≤1.

When the mass percentage of the fourth composition is within an appropriate range, the following situations can be avoided: first, when the percentage of the fourth composition is small, an effect of the fourth composition on improving stability of the positive electrode interface and the negative electrode interface is insignificant; and second, when the content of the fourth composition is large, the effect of the fourth composition on improving stability of the positive electrode interface and the negative electrode interface does not continue to enhance, and in addition, the fourth composition may also increase electrode polarization.

In some embodiments, based on the total weight of the electrolyte, a mass percentage of the fifth composition is E%, and 0.01≤E≤5. For example, E may be 0.01, 0.02, 0.05, 0.08, 0.10, 0.15, 0.20, 0.25, 0.30, 0.35, 0.40, 0.50, 0.60, 0.70, 0.80, 1, 1.5, 2, 3, 4, 5, or in a range defined by any of these values. Optionally, 0.05≤E≤5, 0.05≤E≤4, 0.05≤E≤3, 0.05≤E≤2, 0.05<E<1, 0.05<E<0.5, 0.1≤E≤5, 0.1≤E≤4, 0.1≤E≤3, 0.1≤E≤2, 0.1≤E≤1, 0.1≤E≤0.5, 0.2≤E≤5, 0.2≤E≤4, 0.2≤E≤3, 0.2≤E≤2, 0.2<E<1, or 0.2<E<0.5.

When the mass percentage of the fifth composition is within an appropriate range, the following situations can be avoided: first, when the percentage of the fifth composition is small, an effect of the fifth composition on reducing the impedance of the negative electrode is insignificant; and second, when the percentage of the fifth composition is large, the effect of the fifth composition on reducing the impedance of the negative electrode does not continue to enhance, and in addition, the fifth composition may also increase electrode polarization.

In some embodiments, the electrolyte further includes an organic solvent and a lithium salt. Types of the organic solvent and lithium salt are not specifically limited, and can be selected as required.

In some embodiments, for example, the lithium salt includes, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium difluorosulfimide (LiFSI), lithium difluoromethylsulfonimide (LiTFSI), lithium trifluoromethanesulfonate (LiTFS), lithium difluoromethylborate (LiDFOB), or lithium oxalate borate (LiBOB). The foregoing lithium salts may be used alone, or two or more of them may be used together.

In some embodiments, the organic solvent may include at least one of a carbonate compound, a carboxylate compound, an ether compound, or a sulfone compound. For example, the organic solvent includes, but is not limited to, at least one of propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), ethylsulfonyl ethane (ESE), 1,3-dioxycyclopentane (DOL), or dimethyl ether (DME). The foregoing organic solvents may be used alone, or two or more of them may be used together. Optionally, two or more of the foregoing organic solvents are used together.

The electrolyte may be prepared using a conventional method in the art. For example, the first composition, the second composition, the organic solvent, the lithium salt and other optional compositions may be mixed to uniformity to obtain the electrolyte. There is no special limit on a sequence of adding each material. For example, the first composition, the second composition, the lithium salt and other optional compositions may be added to the organic solvent and mixed to uniformity to obtain the electrolyte.

In this application, each composition and the percentage thereof in the electrolyte may be measured according to conventional methods in the art. For example, each composition and a percentage thereof in the electrolyte may be measured by using gas chromatography-mass spectrometry (GC-MS), ion chromatography (IC), liquid chromatography (LC), and the like.

It should be noted that during a test of the electrolyte in this application, a freshly prepared electrolyte may be used directly or an electrolyte in the electrochemical apparatus may be used. One exemplary method for obtaining the electrolyte from the electrochemical apparatus includes the following steps: the electrochemical apparatus is discharged to a cut-off discharge voltage and centrifugation is conducted, and then an appropriate amount of liquid obtained after the centrifugation is used as the electrolyte.

### Electrochemical apparatus

A second aspect of this application provides an electrochemical apparatus including any apparatus in which electrochemical reactions take place to convert chemical energy and electrical energy into each other. Specific examples of the apparatus include all types of lithium primary batteries and lithium secondary batteries. Especially, the lithium secondary batteries include a lithium metal secondary battery and a lithium-ion secondary battery.

In some embodiments, the electrochemical apparatus in this application includes a positive electrode plate, a negative electrode plate, a separator, and an electrolyte. The electrolyte used in the electrochemical apparatus in this application is the electrolyte according to the first aspect of the embodiments of this application. Therefore, the electrochemical apparatus in this application can have both significantly improved high-temperature resistance and safety performance.

In some embodiments, a positive electrode plate, a negative electrode plate, and a separator may be made into an electrode assembly through winding or lamination.

The electrochemical apparatus in this application further includes an outer package for encapsulating the electrode assembly. In some embodiments, the outer package may be a hard shell, for example, a hard plastic shell, an aluminum shell, or a steel shell; or a soft pack, for example, a soft pouch. A material of the soft pack may be plastic, for example, at least one of polypropylene (PP), polybutylene terephthalate (PBT), or polybutylene succinate (PBS).

### [Positive electrode plate]

A material, a composition, and a manufacturing method of the positive electrode plate used in the electrochemical apparatus in this application may include any technology commonly known in the prior art.

In some embodiments, the positive electrode plate includes a positive electrode current collector, and a positive electrode film layer disposed on at least one surface of the positive electrode current collector. The positive electrode film layer usually includes a positive electrode active material, and an optional conductive agent and binder.

In some embodiments, the positive electrode current collector may be a metal foil or a porous metal plate, for example, a metal foil or porous metal plate made of aluminum, copper, nickel, titanium, silver, and other metals or an alloy thereof. For example, the positive electrode current collector may be an aluminum foil.

The positive electrode active material is selected from materials capable of absorbing and releasing lithium, and specific types of the positive electrode active materials are not specifically limited, and may be selected as required. For example, the positive electrode active material includes, but is not limited to, at least one of lithium cobalt oxide, a lithium nickel cobalt manganese ternary material, a lithium nickel cobalt aluminum ternary material, lithium iron phosphate, a lithium-rich manganese-based material, or their respective modified compounds. The modified compound of each positive electrode active material may be the positive electrode active material being modified through doping alone, surface coating alone, or both doping and coating.

A specific type of the conductive agent is not specifically limited, and may be selected as required. For example, the conductive agent includes, but is not limited to, at least one of conductive graphite, superconducting carbon, acetylene black, carbon black, Ketjen black, carbon dots, carbon nanotubes, graphene, or carbon nanofibers.

A specific type of the binder is not particularly limited, and may be selected as required. For example, the binder includes, but is not limited to, at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or polyvinyl alcohol (PVA).

The positive electrode plate may be prepared using a conventional method in the art. Usually, the positive electrode active material, and the optional conductive agent and binder are dispersed in a solvent to obtain a uniform positive electrode slurry. The positive electrode slurry is applied on the positive electrode current collector, followed by processes such as drying and cold pressing to obtain the positive electrode plate. The solvent may be N-methylpyrrolidone (NMP), but this application is not limited thereto.

### [Negative electrode plate]

A material, a composition, and a manufacturing method of the negative electrode plate used in the electrochemical apparatus in this application may include any technology commonly known in the prior art.

The negative electrode plate may be a lithium metal plate, or may be an electrode plate that includes a negative electrode current collector and a negative electrode film layer disposed on at least one surface of the negative electrode current collector. The negative electrode film layer usually includes a negative electrode active material, and an optional conductive agent, adhesive, and thickener.

A specific type of the negative electrode active material is not specifically limited, and may be selected as required. For example, the negative electrode active material includes, but is not limited to, at least one of natural graphite, artificial graphite, a mesocarbon microbead (MCMB), hard carbon, soft carbon, silicon, a silicon-carbon composite, SiO, a Li-Sn alloy, a Li-Sn-O alloy, Sn, SnO, SnO₂, spinel-structure Li₄Ti₅O₁₂, or a Li-Al alloy.

A specific type of the conductive agent is not specifically limited, and may be selected as required. For example, the conductive agent includes, but is not limited to, at least one of conductive graphite, superconducting carbon, acetylene black, carbon black, Ketjen black, carbon dots, carbon nanotubes, graphene, or carbon nanofibers.

A specific type of the binder is not specifically limited, and may be selected as required. For example, the binder includes, but is not limited to, at least one of styrene butadiene rubber (SBR), polyvinylidene fluoride (PVDF), polytetrafluoroethylene (PTFE), polyvinyl butyral (PVB), water-based acrylic resin (water-based acrylic resin), or carboxymethyl cellulose.

A specific type of the thickener is not specifically limited, and may be selected as required. For example, the thickener includes, but is not limited to, sodium carboxymethyl cellulose (CMC).

However, this application is not limited to the foregoing materials. Other commonly known materials usable as a negative electrode active material, a conductive agent, an adhesive, and a thickener can be used as negative electrode plate in this application.

The negative electrode current collector has two opposite surfaces in its thickness direction, and the negative electrode film layer is disposed on either or both of the two opposite surfaces of the negative electrode current collector.

The negative electrode current collector may be a metal foil or a porous metal plate, for example, a metal foil or porous metal plate made of copper, nickel, titanium, iron, and other metals or an alloy thereof. For example, the negative electrode current collector is a copper foil.

The negative electrode plate may be prepared using a conventional method in the art. Usually, the negative electrode active material, and the optional conductive agent, binder, and thickener are dispersed in a solvent to obtain a uniform negative electrode slurry. The negative electrode slurry is applied on the negative electrode current collector, followed by processes such as drying and cold pressing to obtain the negative electrode plate. The solvent may be N-methylpyrrolidone (NMP) or deionized water, but this application is not limited thereto.

The negative electrode plate in this application does not exclude other additional functional layers other than the negative electrode film layer. For example, in some embodiments, the negative electrode plate in this application further includes a conductive primer (for example, including a conductive agent and a binder) that is sandwiched between the negative electrode current collector and the negative electrode film layer and that is disposed on the surface of the negative electrode current collector. In some other embodiments, the negative electrode plate in this application further includes a protective layer covering a surface of the negative electrode film layer.

### [Separator]

The separator is disposed between the positive electrode plate and the negative electrode plate to prevent short circuit of the positive electrode and negative electrode and to allow lithium ions to pass through. This application has no special limit on a type of the separator, and any commonly known porous structure separator with good chemical stability and mechanical stability may be selected. The separator may be a single-layer film or a multi-layer composite film. When the separator is a mualti-layer composite film, materials of all layers may be the same or different.

In some embodiments, the separator includes a polymer, an inorganic substance, and the like formed by a material stable to the electrolyte in this application.

For example, the separator may include a substrate layer and an optional surface treatment layer. The substrate layer may include a non-woven fabric, film, or composite film of a porous structure. The substrate layer may be made of at least one of polyethylene, polypropylene, polyethylene terephthalate, or polyimide. For example, a polypropylene porous film, a polyethylene porous film, a polypropylene non-woven fabric, a polyethylene non-woven fabric or a polypropylene-polyethylene-polypropylene porous composite membrane may be selected.

A surface of the substrate layer may be or may not be provided with a surface treatment layer. In some embodiments, at least one surface of the substrate layer is provided with a surface treatment layer, and the surface treatment layer may be a polymer layer or an inorganic substance layer, or a layer formed by mixing the polymer and the inorganic substance.

The inorganic substance layer includes inorganic particles and a binder. The inorganic particles include, but are not limited to, at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes, but is not limited to, at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyethylene ether, polymethyl methacrylate, polytetrafluoroethylene, or polyhexafluoropropylene.

The polymer layer includes a polymer, and a material of the polymer includes, but is not limited to, at least one of polyamide, polyacrylonitrile, acrylate polymer, polyacrylic acid, polyacrylate, polyvinylpyrrolidone, polyethylene ether, polyvinylidene fluoride, or a vinylidene fluoride-hexafluoropropylene copolymer.

### Electronic apparatus

A third aspect of embodiments of this application provides an electronic apparatus, and the electronic apparatus includes the electrochemical apparatus according to the second aspect of embodiments of this application.

The electronic apparatus in this application is not particularly limited, and may be any known electronic apparatus used in the prior art. In some embodiments, the electronic apparatus may include, but is not limited to, notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, automobiles, motorcycles, assisted bicycles, bicycles, lighting apparatuses, toys, game machines, clocks, electric tools, flashlights, cameras, large household storage batteries, and lithium-ion capacitors.

### Example

The following examples describe in more detail content disclosed in this application. These examples are intended only for illustrative purposes because various modifications and changes made without departing from the scope of the content disclosed in this application are apparent to persons skilled in the art. Unless otherwise stated, all parts, percentages, and ratios reported in the following examples are based on masses, all reagents used in the examples are commercially available or synthesized in a conventional manner, and can be used directly without further processing, and all instruments used in the examples are commercially available.

### Examples 1 to 44 and Comparative Examples 1 to 3

In Examples 1 to 44 and Comparative Examples 1 to 3, a lithium-ion battery was prepared according to the following method.

### Preparation of electrolyte

In an argon atmosphere glove box with a water content<10 ppm, propylene carbonate (PC) and diethyl carbonate (DEC) were mixed to uniformity at a mass ratio of 1:2 to obtain a basic solvent; a lithium salt LiPF₆ was dissolved in the basic solvent, and the resulting mixture is mixed to uniformity to obtain a basic electrolyte; a given mass percentage of ethylene carbonate (EC), fluoroethylene carbonate (FEC), multi-nitrile compound containing an ether bond (-O-), multi-nitrile compound containing a phosphorus atom or a phosphorus oxygen bond (P=O), and halogenated carboxylate were added into the obtained basic electrolyte, and the resulting mixture was mixed to uniformity to obtain the electrolyte.

A mass percentage of LiPF₆ is 12.5%, and mass percentages of EC and FEC were shown in Table 1 separately. Specific types and percentages of the multi-nitrile compound containing an ether bond (-O-), the multi-nitrile compound containing a phosphorus atom or a phosphorus oxygen bond (P=O), and the halocarboxylate were shown in Table 1 separately, and a mass percentage of each composition was calculated based on a total mass of the electrolyte.

### Preparation of positive electrode plate

A positive electrode active material LiCoO₂, a conductive agent acetylene black, and a binder polyvinylidene fluoride (PVDF) were thoroughly stirred in an appropriate amount of a solvent N-methylpyrrolidone (NMP) at a mass ratio of 96:2:2, to obtain a uniform positive electrode slurry; and the positive electrode slurry was applied onto a positive electrode current collector aluminum foil, followed by drying and cold pressing, to obtain a positive electrode plate.

### Preparation of negative electrode plate

A negative electrode active material graphite, a binder styrene-butadiene rubber (SBR), a thickener sodium carboxymethyl cellulose (CMC) were thoroughly stirred in an appropriate amount of a solvent deionized water at a mass ratio of 97.4:1.2:1.4, to obtain a uniform negative electrode slurry; and the negative electrode slurry was applied onto a negative electrode current collector copper foil, followed by drying and cold pressing, to obtain a negative electrode plate.

### Preparation of separator

A PE porous film was used as a separator.

### Preparation of lithium-ion battery

The positive electrode, the separator, and the negative electrode were laminated in order, so that the separator was located between the positive electrode and the negative electrode for separation, followed by winding to obtain an electrode assembly; the electrode assembly was placed into an outer package aluminum foil, and the above electrolyte was injected, followed by processes such as vacuum packaging, standing, formation, and shaping, to obtain a lithium-ion battery.

The compositions used in the electrolytes of Examples 1 to 44 and Comparative Examples 1 to 3 were abbreviated as follows:

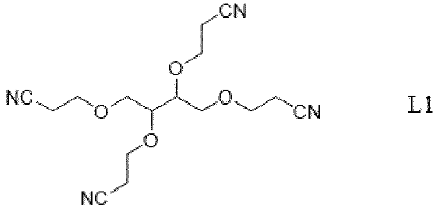

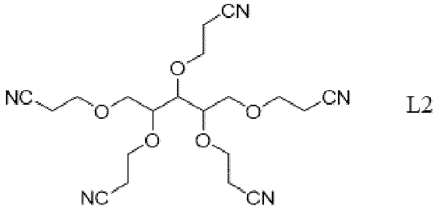

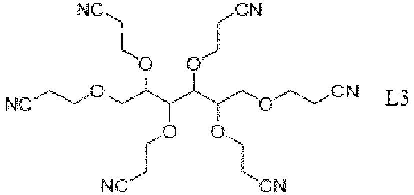

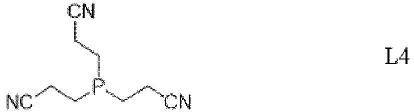

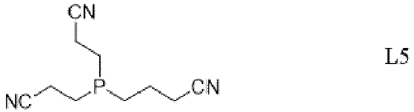

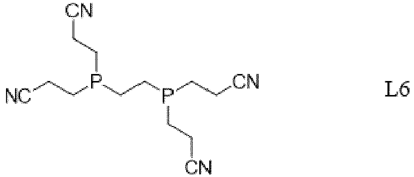

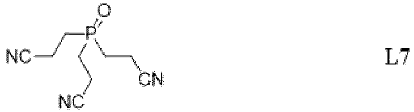

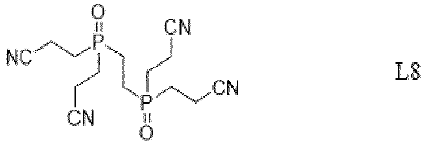

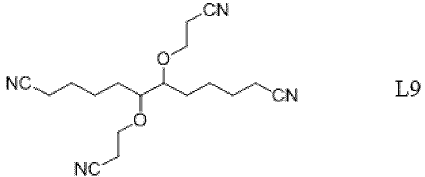

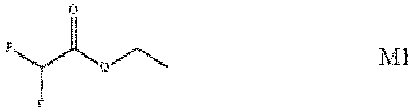

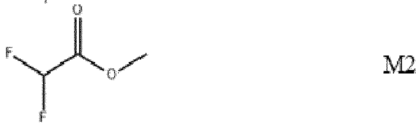

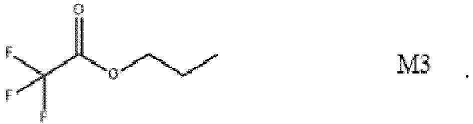

**Table 1**

| No. | First composition | | Second composition | | Third composition | | | X/Y | C/X |
|---|---|---|---|---|---|---|---|---|---|
| | Compound | X% | Compound | Y% | Percentage of FEC (%) | Percentage of EC (%) | C% | | |
| Example 1 | L1 | 0.1 | M1 | 4 | 3 | 15 | 18 | 0.03 | 180 |
| Example 2 | L1 | 0.5 | M1 | 4 | 3 | 15 | 18 | 0.13 | 36 |
| Example 3 | L1 | 1 | M1 | 4 | 3 | 15 | 18 | 0.25 | 18 |
| Example 4 | L1 | 1.5 | M1 | 4 | 3 | 15 | 18 | 0.38 | 12 |
| Example 5 | L1 | 2 | M1 | 4 | 3 | 15 | 18 | 0.5 | 9 |
| Example 6 | L1 | 3 | M1 | 4 | 3 | 15 | 18 | 0.75 | 6 |
| Example 7 | L1 | 5 | M1 | 4 | 3 | 15 | 18 | 1.25 | 3.6 |
| Example 8 | L2 | 1.5 | M1 | 4 | 3 | 15 | 18 | 0.38 | 12 |
| Example 9 | L3 | 1.5 | M1 | 4 | 3 | 15 | 18 | 1.38 | 12 |
| Example 10 | L4 | 0.01 | M1 | 4 | 3 | 15 | 18 | 0.003 | 1800 |
| Example 11 | L4 | 0.1 | M1 | 4 | 3 | 15 | 18 | 0.03 | 180 |
| Example 12 | L4 | 0.2 | M1 | 4 | 3 | 15 | 18 | 0.05 | 90 |
| Example 13 | L4 | 0.5 | M1 | 4 | 3 | 15 | 18 | 0.13 | 36 |
| Example 14 | L4 | 1 | M1 | 4 | 3 | 15 | 18 | 0.25 | 18 |
| Example 15 | L4 | 1.5 | M1 | 4 | 3 | 15 | 18 | 0.38 | 12 |
| Example 16 | L4 | 2 | M1 | 4 | 3 | 15 | 18 | 0.5 | 9 |
| Example 17 | L4 | 3 | M1 | 4 | 3 | 15 | 18 | 0.75 | 6 |
| Example 18 | L4 | 5 | M1 | 4 | 3 | 15 | 18 | 1.25 | 4 |
| Example 19 | L6 | 0.5 | M1 | 4 | 3 | 15 | 18 | 0.13 | 36 |
| Example 20 | L7 | 0.5 | M1 | 4 | 3 | 15 | 18 | 0.13 | 36 |
| Example 21 | L8 | 0.5 | M1 | 4 | 3 | 15 | 18 | 0.13 | 36 |
| Example 22 | L9 | 1.5 | M1 | 4 | 3 | 15 | 18 | 0.38 | 12 |
| Example 23 | L1+L4 | 1+0.5 | M1 | 4 | 3 | 15 | 18 | 0.38 | 12 |
| Example 24 | L1+L4 | 1.5+0.5 | M1 | 4 | 3 | 15 | 18 | 0.5 | 9 |
| Example 25 | L1+L4 | 2+0.5 | M1 | 4 | 3 | 15 | 18 | 0.63 | 7 |
| Example 26 | L1+L4 | 1.5+1 | M1 | 4 | 3 | 15 | 18 | 0.63 | 7 |
| Example 27 | L1+L4 | 1.5+1.5 | M1 | 4 | 3 | 15 | 18 | 0.75 | 6 |
| Example 28 | L1+L4 | 1.5+2 | M1 | 4 | 3 | 15 | 18 | 0.88 | 5 |
| Example 29 | L2+L6 | 1.5+0.5 | M1 | 4 | 3 | 15 | 18 | 0.5 | 9 |
| Example 30 | L3+L7 | 1.5+0.5 | M1 | 4 | 3 | 15 | 18 | 0.5 | 9 |
| Example 31 | L1+L4 | 3+3 | M1 | 4 | 3 | 15 | 18 | 1.5 | 3 |
| Example 32 | L1+L4 | 4+4 | M1 | 4 | 3 | 15 | 18 | 2.0 | 2.3 |
| Example 33 | L2+L5 | 5+5 | M1 | 4 | 3 | 15 | 18 | 2.5 | 1.8 |
| Example 34 | L1+L4 | 5+5 | M1 | 2 | 3 | 15 | 18 | 5.0 | 1.8 |
| Example 35 | L1+L4 | 1+0.5 | M1 | 8 | 3 | 15 | 18 | 0.19 | 12 |
| Example 36 | L1+L4 | 1+0.5 | M1 | 16 | 3 | 15 | 18 | 0.09 | 12 |
| Example 37 | L1+L4 | 1+0.5 | M1 | 20 | 3 | 15 | 18 | 0.08 | 12 |
| Example 38 | L1+L4 | 1+0.5 | M2 | 4 | 3 | 15 | 18 | 0.38 | 12 |
| Example 39 | L1+L4 | 1+0.5 | M3 | 4 | 3 | 15 | 18 | 0.38 | 12 |
| Example 40 | L1+L4 | 1.5+0.5 | M1 | 4 | 3 | 7 | 10 | 0.50 | 5 |
| Example 41 | L1+L4 | 2+1 | M1 | 4 | 5 | 25 | 30 | 0.75 | 10 |
| Example 42 | L1+L2+L4+L6 | 2+1+1+1 | M1 | 4 | 8 | 17 | 25 | 1.25 | 5 |
| Example 43 | L1+L2+L4+L6 | 2+1+1+1 | M1 | 4 | 15 | 15 | 30 | 1.25 | 6 |
| Example 44 | L4 | 0.2 | M1 | 4 | 8 | 17 | 25 | 0.05 | 125 |
| Comparative Examples 1 | / | / | M1 | 4 | 3 | 15 | 18 | / | / |
| Comparative Examples 2 | L1 | 1 | / | / | 3 | 15 | 18 | / | 18 |
| Comparative Examples 3 | / | / | / | / | 3 | 15 | 18 | / | / |

### Tests

### (1) Thermal abuse safety performance test

At 25°C, the lithium-ion battery was charged to 4.4V at a constant current of 0.5C, then charged to 0.05C at a constant voltage of 4.4V, and the lithium-ion battery at that point was fully charged. After the lithium-ion battery was left standing for 60 min, the lithium-ion battery was transferred to a hot box for testing. Refer to GB/T 18287-2013 for the test, the lithium-ion battery in the hot box was heated up to 130°C to 140°C at a constant speed of 3 °C/min and then remained at 130°C to 140°C for 60 min. Then a pass rate of the lithium-ion battery was recorded. To ensure reliability of the test result, at least 5 parallel samples were tested and an average value was taken.

### (2) High-temperature interval cycling performance test

In a constant-temperature box at 45°C, the lithium-ion battery was charged to 4.4V at a constant current of 0.5C, and then charged to 0.05C at a constant voltage of 4.4V. After the lithium-ion battery maintained such state for 19.5 hours, the lithium-ion battery was discharged to 3.0V at a constant current of 0.5C. This was one charge and discharge cycle. The lithium-ion battery was tested for 23 charge and discharge cycles according to the foregoing method.

Then, the lithium-ion battery was charged again to 4.35V at a constant current of 0.5C, then charged to 0.05C at a constant voltage of 4.35V. After the lithium-ion battery maintained such state for 19.5 hours, the lithium-ion battery was discharged to 3.0V at a constant current of 0.5C. This was another charge and discharge cycle. The test ended after the lithium-ion battery was tested for 113 charge and discharge cycles according to the foregoing method.

Capacity retention rate (%) of the lithium-ion battery=(discharge capacity at the 136^{th} cycle/discharge capacity at the first cycle)×100%.

Thickness swelling rate (%) of the lithium-ion battery=(thickness in full charge at the 136^{th} cycle-thickness in full charge at the first cycle)/thickness in full charge at the first cycle×100%.

Table 2 shows test results of Examples 1 to 44 and Comparative Examples 1 to 3.

**Table 2**

| No. | Pass rate of hot box test | High-temperature interval cycling performance | |
|---|---|---|---|
| | | Capacity retention rate | Thickness swelling rate |
| Example 1 | 1/10 | 62.0% | 14.2% |
| Example 2 | 3/10 | 64.7% | 13.3% |
| Example 3 | 5/10 | 65.3% | 13.1% |
| Example 4 | 5/10 | 65.6% | 13.2% |
| Example 5 | 5/10 | 65.2% | 13.4% |
| Example 6 | 6/10 | 64.6% | 13.6% |
| Example 7 | 6/10 | 64.2% | 13.9% |
| Example 8 | 6/10 | 65.8% | 13.6% |
| Example 9 | 5/10 | 65.4% | 13.1% |
| Example 10 | 0/10 | 50.2% | 18.1% |
| Example 11 | 1/10 | 62.1% | 14.0% |
| Example 12 | 3/10 | 63.8% | 13.8% |
| Example 13 | 5/10 | 65.7% | 12.8% |
| Example 14 | 5/10 | 65.6% | 13.0% |
| Example 15 | 6/10 | 65.2% | 13.2% |
| Example 16 | 6/10 | 65.0% | 132% |
| Example 17 | 6/10 | 64.4% | 13.3% |
| Example 18 | 7/10 | 63.9% | 13.4% |
| Example 19 | 5/10 | 65.3% | 13.1% |
| Example 20 | 4/10 | 64.9% | 12.9% |
| Example 21 | 4/10 | 65.1% | 12.7% |
| Example 22 | 6/10 | 65.5% | 13.4% |
| Example 23 | 7/10 | 68.9% | 11.4% |
| Example 24 | 7/10 | 68.7% | 12.2% |
| Example 25 | 8/10 | 68.3% | 12.2% |
| Example 26 | 7/10 | 68.6% | 12.6% |
| Example 27 | 8/10 | 68.4% | 12.3% |
| Example 28 | 8/10 | 68.5% | 12.4% |
| Example 29 | 7/10 | 68.5% | 11.8% |
| Example 30 | 7/10 | 68.6% | 11.6% |
| Example 31 | 8/10 | 65.3% | 12.4% |
| Example 32 | 10/10 | 64.5% | 12.2% |
| Example 33 | 10/10 | 63.3% | 12.5% |
| Example 34 | 4/10 | 61.3% | 13.6% |
| Example 35 | 8/10 | 69.0% | 11.3% |
| Example 36 | 10/10 | 68.3% | 11.2% |
| Example 37 | 10/10 | 67.1% | 11.1% |
| Example 38 | 5/10 | 67.2% | 12.6% |
| Example 39 | 7/10 | 68.1% | 12.1% |
| Example 40 | 8/10 | 70.7% | 10.1% |
| Example 41 | 8/10 | 70.9% | 11.3% |
| Example 42 | 7/10 | 71.3% | 10.5% |
| Example 43 | 8/10 | 71.1% | 10.6% |
| Example 44 | 5/10 | 61.1% | 13.6% |
| Comparative Examples 1 | 0/10 | 45.2% | 26.1% |
| Comparative Examples 2 | 0/10 | 40.4% | 26.7% |
| Comparative Examples 3 | 0/10 | 37.7% | 31.5% |

It can be seen from the test results in Table 2 that when the electrolyte included both the first composition and the second composition, the lithium-ion battery had a higher capacity retention rate and a lower thickness swelling rate after high-temperature interval cycling. In addition, thermal abuse safety performance of the lithium-ion battery was also significantly improved.

It can also be seen from the test results of Examples 1 to 44 that when mass percentages of the first composition and the second composition were within an appropriate range, the lithium-ion battery could have a higher capacity retention rate and a lower thickness swelling rate after high-temperature interval cycling. In addition, the lithium-ion battery had better thermal abuse safety performance as well. Optionally, the mass percentage of the first composition was X%, where X was any value between 0.01 and 10, and the mass percentage of the second composition was Y%, where Y was any value between 0.01 and 20. Further, X was any value between 0.2 and 10, Y was any value between 2 and 20, and furthermore, X was any value between 0.2 and 5, and Y was any value between 2 and 20.

It can also be seen from the test results of Examples 1 to 44 that when a mass ratio of the first composition to the second composition was within an appropriate range, there was a better synergistic effect between the first composition and the second composition, so that the lithium-ion battery could have a higher capacity retention rate and a lower thickness swelling rate after high-temperature interval cycling, and in addition, the lithium-ion battery had better thermal abuse safety performance as well. Optionally, the mass ratio of the first composition to the second composition X/Y was any value between 0.01 and 5.0, or further, any value between 0.05 and 2.5.

It can also be seen from the test results of Examples 1 to 44 that when the mass ratio of the third composition to the first composition X/Y was within an appropriate range, there was a better synergistic effect between the two compositions, so that the lithium-ion battery could have a higher capacity retention rate and a lower thickness swelling rate after high-temperature interval cycling, and in addition, the lithium-ion battery also had better thermal abuse safety performance. Optionally, the mass ratio C/X of the third composition to the first composition was any value between 1.6 and 180, or further, any value between 1.6 and 125, or furthermore, any value between 1.6 and 36.

It can also be seen from the test results of Examples 1 to 22 and Examples 23 to 44 that when the first composition included both a multi-nitrile compound containing an ether bond (-O-) and a multi-nitrile compound containing a phosphorus atom or a phosphorus oxygen bond (P=O), the lithium-ion battery could have a higher capacity retention rate and a lower thickness swelling rate after high-temperature interval cycling, and in addition, the lithium-ion battery had better thermal abuse safety performance as well.

### Examples 45 to 51

The lithium-ion batteries in Examples 45 to 51 were prepared using a method similar to those in Examples 1 to 44, except that preparation parameters of the electrolyte were different. The electrolytes in Examples 45 to 51 were further added with a fourth composition on a basis of the electrolyte in Example 42. Specific parameters were shown in Table 3.

The compositions used in the electrolytes of Examples 45 to 51 were abbreviated as follows:

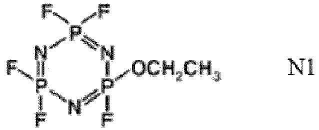

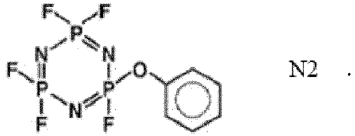

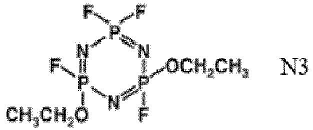

Table 3 shows test results of Examples 45 to 51.

**Table 3**

| No. | Fifth composition | | Pass rate of hot box test | High-temperature interval cycling performance | |
|---|---|---|---|---|---|
| | Compound | E% | | Capacity retention rate | Thickness swelling rate |
| Example 42 | / | / | 7/10 | 71.3% | 10.5% |
| Example 45 | N1 | 0.5 | 10/10 | 72.5% | 10.0% |
| Example 46 | N1 | 1 | 10/10 | 73.1% | 9.8% |
| Example 47 | N1 | 1.5 | 10/10 | 73.2% | 9.9% |
| Example 48 | N1 | 3 | 10/10 | 72.9% | 10.0% |
| Example 49 | N1 | 5 | 10/10 | 72.1% | 9.9% |
| Example 50 | N2 | 1 | 10/10 | 72.7% | 10.1% |
| Example 51 | N3 | 1 | 10/10 | 72.8% | 10.2% |

It can be seen from the test results in Table 3 that after the fourth composition (a phosphoronitrile compound) of this application was further added based on the electrolyte in Example 42, the lithium-ion battery could have a higher capacity retention rate and a lower thickness swelling rate after high-temperature interval cycling, and in addition, the lithium-ion battery had better thermal abuse safety performance as well. A possible reason was that there was a synergistic effect between a plurality of compositions of the electrolyte. In this case, the thermal stability and electrochemical stability of the electrolyte were higher, and the electrolyte resistance of the positive electrode interface and the negative electrode interface was also higher.

### Examples 52 to 57

The lithium-ion batteries in Examples 52 to 57 were prepared using a method similar to those in Examples 1 to 44, except that preparation parameters of the electrolyte were different. The electrolytes in Examples 52 to 57 were further added with a fifth composition on a basis of the electrolytes in Example 42. The specific parameters were shown in Table 4.

Table 4 shows test results of Examples 52 to 57.

**Table 4**

| No. | Fifth composition | | Pass rate of hot box test | High-temperature interval cycling performance | |
|---|---|---|---|---|---|
| | Compound | E % | | Capacity retention rate | Thickness swelling rate |
| Example 42 | / | / | 7/10 | 71.30% | 10.50% |
| Example 52 | LiPO₂F₂ | 0.05 | 10/10 | 72.10% | 10.30% |
| Example 53 | LiPO₂F₂ | 0.1 | 10/10 | 72.9% | 10.10% |
| Example 54 | LiPO₂F₂ | 0.3 | 10/10 | 72.80% | 9.90% |
| Example 55 | LiPO₂F₂ | 0.5 | 10/10 | 72.10% | 10.00% |
| Example 56 | LiDFOP | 0.3 | 10/10 | 73.10% | 10.10% |
| Example 57 | LiTFOP | 0.3 | 10/10 | 73.00% | 10.20% |

It can be seen from the test results in Table 4 that after the fifth composition of this application was further added based on the electrolyte in Example 42, the lithium-ion battery could have a higher capacity retention rate and a lower thickness swelling rate after high-temperature interval cycling, and in addition, the lithium-ion battery had better thermal abuse safety performance as well. A possible reason was that there was a synergistic effect between a plurality of compositions of the electrolyte. In this case, the thermal stability and electrochemical stability of the electrolyte were higher, and the electrolyte resistance of the positive electrode interface and the negative electrode interface was also higher.

The foregoing descriptions are merely specific examples of this application, but are not intended to limit the protection scope of this application. Any equivalent modifications or replacements readily figured out by persons skilled in the art within the technical scope disclosed in this application shall fall within the protection scope of this application. Therefore, the protection scope of this application shall be subject to the protection scope of the claims.

## Claims

1. An electrolyte, comprising a first composition and a second composition, wherein the first composition comprises at least one of a compound shown in formula I-A, a compound shown in formula I-B, or a compound shown in formula I-C, and the second composition comprises a compound shown in formula II, 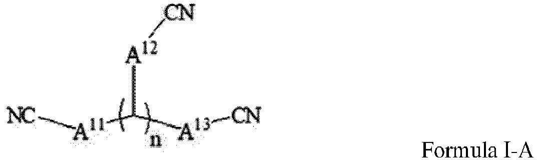 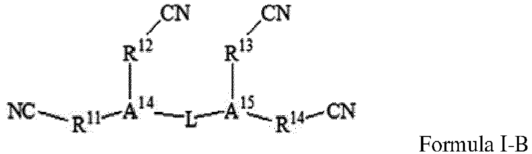 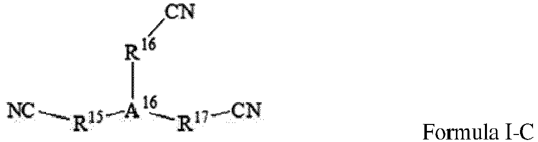 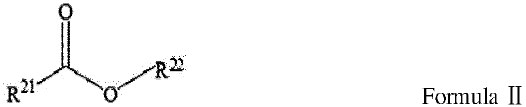 ; wherein
n is an integer from 2 to 8;
A¹¹, A¹², and A¹³ each independently is a group shown in A1 or A2, a structure of formula I-A comprises at least two groups shown in A2, and 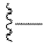 represents a connection site; 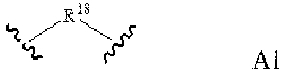 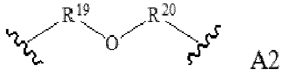 ;
R¹⁸, R¹⁹, and R²⁰ each independently is a single bond, a C₁-C₁₀ divalent alkyl group substituted or unsubstituted by R^{a}, a C₂-C₁₀ divalent alkenyl group substituted or unsubstituted by R^{a}, a C₂-C₁₀ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a};
A¹⁴, A¹⁵, and A¹⁶ each independently is a group shown in B1 or B2, and 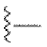 is a connection site; 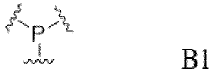 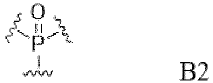 ;
R¹¹, R¹², R¹³, R¹⁴, R¹⁵, R¹⁶, and R¹⁷ each independently is a single bond, a C₁-C₁₀ divalent alkyl group substituted or unsubstituted by R^{a}, a C₂-C₁₀ divalent alkenyl group substituted or unsubstituted by R^{a}, a C₂-C₁₀ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a};
L isis a single bond, a C₁-C₆ divalent alkyl group substituted or unsubstituted by R^{a}, a C₂-C₆ divalent alkenyl group substituted or unsubstituted by R^{a}, a C₂-C₆ divalent alkynyl group substituted or unsubstituted by R^{a}, a C₆-C₁₀ divalent aryl group substituted or unsubstituted by R^{a}, a C₃-C₁₀ divalent alicyclic group substituted or unsubstituted by R^{a}, a C₁-C₁₀ divalent aliphatic heterocyclic group substituted or unsubstituted by R^{a}, or a C₁-C₁₀ divalent aromatic heterocyclic group substituted or unsubstituted by R^{a};
R²¹ and R²² each independently is a C₁-C₁₀ monovalent alkyl group or a C₁-C₁₀ monovalent fluoroalkyl group, and at least one of R²¹ or R²² isis a C₁-C₁₀ monovalent fluoroalkyl group; and
R^{a} isis at least one selected from the group consisting of a halogen atom, a C₁-C₁₀ monovalent alkyl or haloalkyl group, a C₂-C₁₀ monovalent alkenyl or haloalkenyl group, a C₂-C₁₀ monovalent alkynyl or haloalkynyl group, a C₆-C₁₀ monovalent aryl or haloaryl group, a C₃-C₁₀ monovalent alicyclic or halogenated alicyclic group, a C₁-C₁₀ monovalent alicyclic or halogenated aliphatic heterocyclic group, and a C₁-C₁₀ monovalent aryl heterocyclic or halogenated aryl heterocyclic group.

2. The electrolyte according to claim 1, wherein the first composition meets at least one of following condition (1) to condition (10):
(1) R¹¹, R¹², R¹³, R¹⁴, R¹⁵, R¹⁶, and R¹⁷ each independently is the C₁-C₁₀ divalent alkyl group substituted or unsubstituted by R^{a};
(2) L is a single bond, a C₁-C₆ divalent alkyl group, a C₂-C₆ divalent alkenyl group, or a C₂-C₆ divalent alkynyl group;
(3) A¹¹ and A¹³ each independently is a group shown in A1 or A2, wherein R¹⁸ is the C₁-C₁₀ divalent alkyl group substituted or unsubstituted by R^{a}, R¹⁹ and R²⁰ each independently is a single bond, or the C₁-C₁₀ divalent alkyl group substituted or unsubstituted by R^{a}, and at least one of R¹⁹ or R²⁰ is not a single bond;
(4) A¹² is the group shown in A2, wherein one of R¹⁹ and R²⁰ is a single bond and is connected to a C atom, and the other is a C₁-C₁₀ divalent alkyl group substituted or unsubstituted by R^{a} and is connected to -CN;
(5) A¹¹ is the same as A¹³;
(6) R¹¹, R¹², R¹³, and R¹⁴ are the same;
(7) at least two of R¹⁵, R¹⁶, and R¹⁷ are the same;
(8) R^{a} is at least one selected from the group consisting of a halogen atom, a C₂-C₆ univalent alkenyl or haloalkenyl group, a phenyl group, a halophenyl group, a cyclohexenyl group, and a halocyclohexenyl group;
(9) n is 2, 3, 4, 5, or 6; and
(10) the first composition comprises a compound shown in formula I-A and at least one of a compound shown in formula I-B or a compound shown in formula I-C.

3. The electrolyte according to any one of claims 1 to 2, wherein
the first composition comprises at least one of the following compounds: 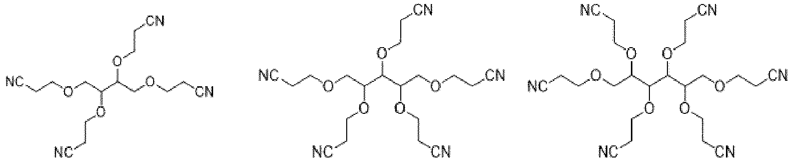 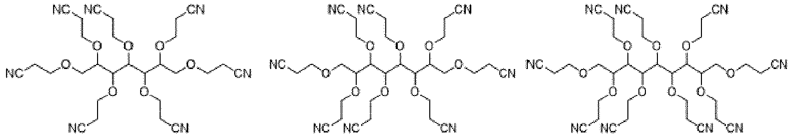 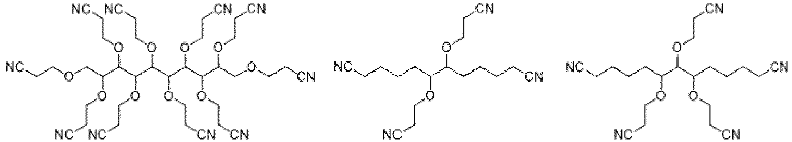 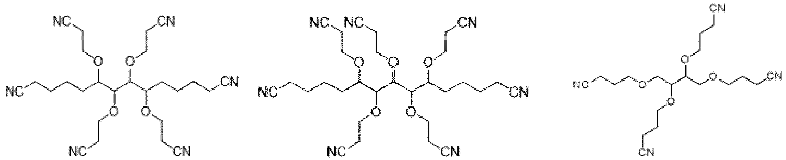 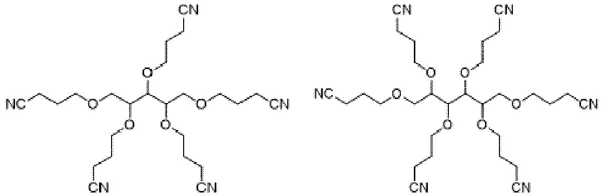 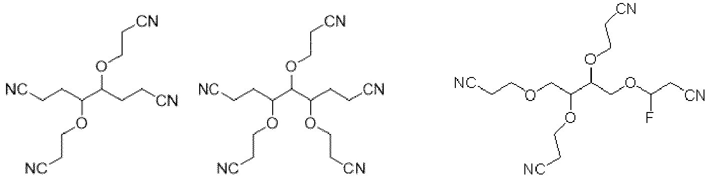 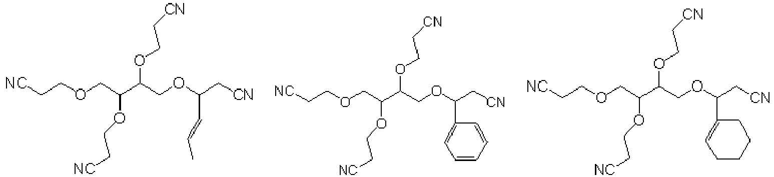 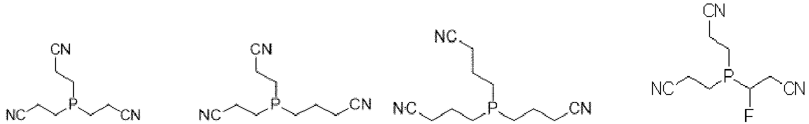 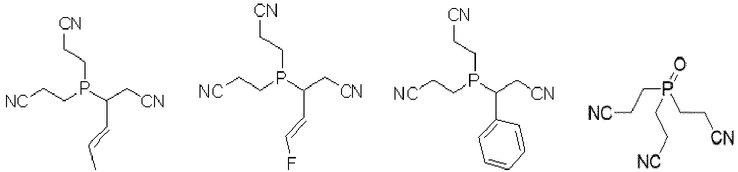 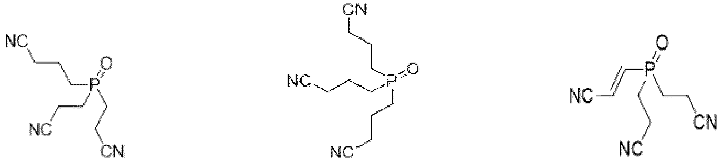 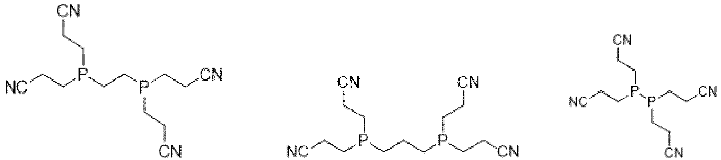 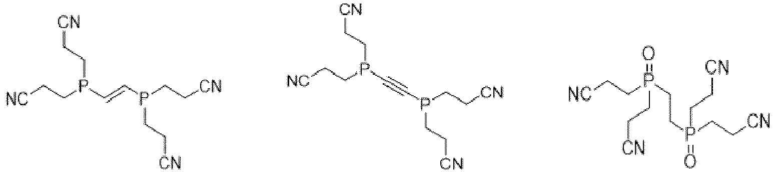 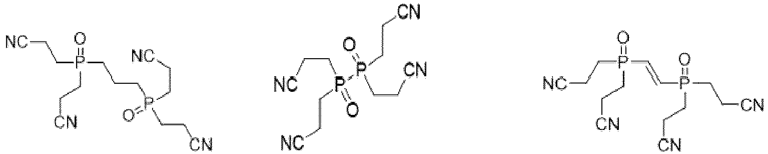 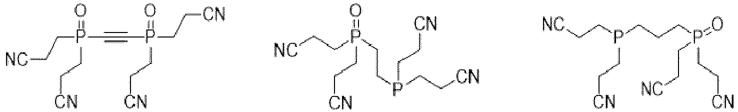 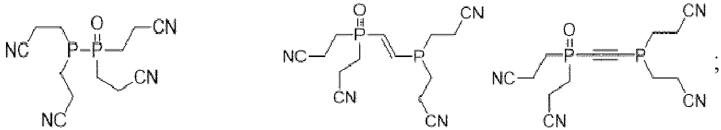 and the second composition comprises at least one of the following compounds:

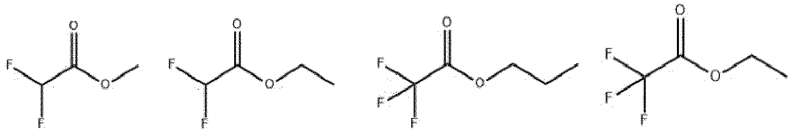

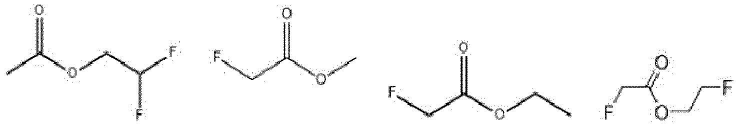

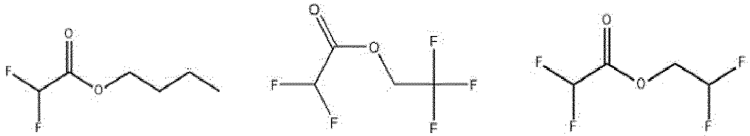

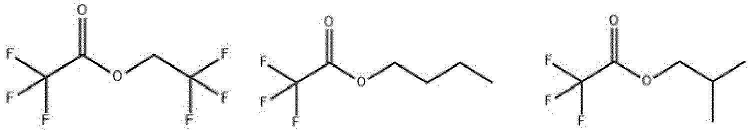

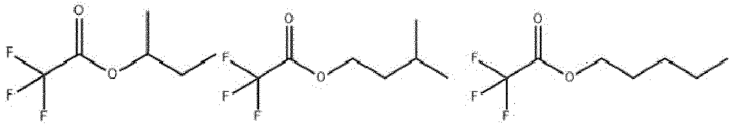

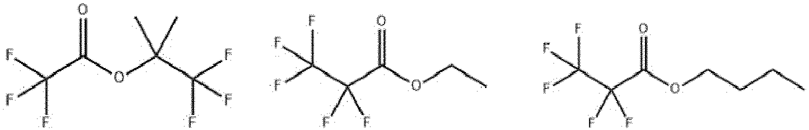

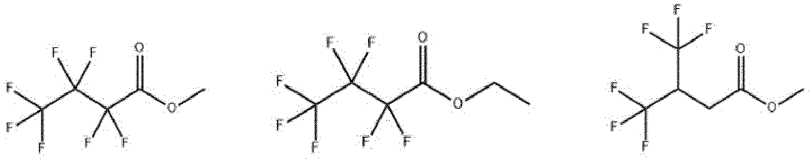

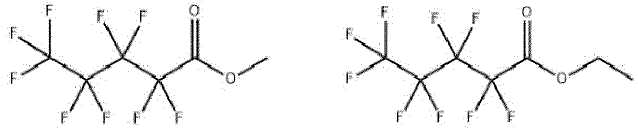

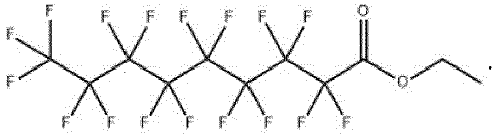

4. The electrolyte according to any one of claims 1 to 3, wherein the electrolyte meets at least one of following condition (1) to condition (3):
(1) based on a total mass of the electrolyte, a mass percentage of the first composition is X%, and 0.01≤X≤10;
(2) based on a total mass of the electrolyte, a mass percentage of the second composition is Y%, and 0.01≤Y≤20; and
(3) based on a total mass of the electrolyte, a mass percentage of the first composition is X%, a mass percentage of the second composition is Y%, and 0.01≤X/Y≤5.0.

5. The electrolyte according to any one of claims 1 to 3, wherein the electrolyte meets at least one of the following conditions (1) to (4):
(1) n is 2, 3, or 4;
(2) based on a total mass of the electrolyte, a mass percentage of the first composition is X%, and 0.2≤X≤5;
(3) based on a total mass of the electrolyte, a mass percentage of the second composition is Y%, and 2≤Y≤20;
(4) based on a total mass of the electrolyte, a mass percentage of the first composition is X%, a mass percentage of the second composition is Y%, and 0.05≤X/Y≤2.5.

6. The electrolyte according to any one of claims 1 to 5, wherein the electrolyte further comprises a third composition, and the third composition comprises at least one of ethylene carbonate or fluoroethylene carbonate.

7. The electrolyte according to claim 6, wherein the third composition meets at least one of the following conditions (1) and (2):
(1) based on a total weight of the electrolyte, a mass percentage of the third composition is C%, and 0.01≤C≤30; and
(2) based on a total mass of the electrolyte, a mass percentage of the first composition is X%, and a mass percentage of the third composition is C%, and 1.6≤C/X≤125.

8. The electrolyte according to claim 6, wherein the third composition meets at least one of the following conditions (1) and (2):
(1) based on a total weight of the electrolyte, a mass percentage of the third composition is C%, and 1≤C≤20;
(2) based on a total mass of the electrolyte, a mass percentage of the first composition is X%, a mass percentage of the third composition is C%, and 1.6≤C/X≤36.

9. The electrolyte according to any one of claims 6 to 8, wherein the third composition meets one of the following condition (1) to condition (3):
(1) the third composition comprises ethylene carbonate; based on a total weight of the electrolyte, a mass percentage of the ethylene carbonate is C1%, and 0.01≤C1≤ 25;
(2) the third composition comprises fluoroethylene carbonate; based on a total weight of the electrolyte, a mass percentage of the fluoroethylene carbonate is C2%, and 0.01≤C2≤20; and
(3) the third composition comprises ethylene carbonate and fluoroethylene carbonate; based on a total weight of the electrolyte, a mass percentage of the ethylene carbonate is C1%, and 0.01≤C1≤25; and a mass percentage of the fluoroethylene carbonate is C2%, and 0.01≤C2≤20, wherein 0.02≤C1+C2≤30.

10. The electrolyte according to any one of claims 1 to 9, wherein the electrolyte meets at least one of the following conditions (1) and (2): 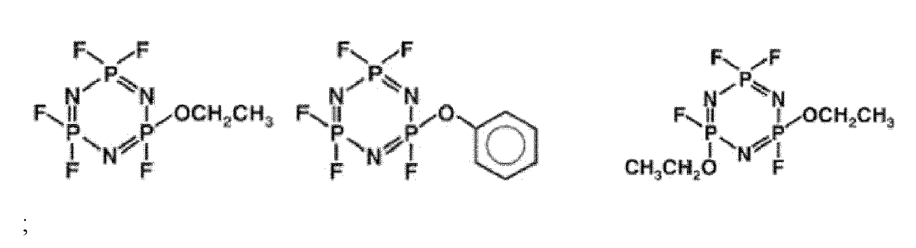
(1) the electrolyte further comprises a fourth composition, the fourth composition comprises at least one of the following compounds: ; and based on a total weight of the electrolyte, a mass percentage of the fourth composition is D%, and 0.1≤D≤5;
(2) the electrolyte further comprises a fifth composition, the fifth composition comprises at least one of the following compounds: lithium difluorophosphate, lithium difluorodioxalate phosphate, lithium tetrafluorooxalate phosphate, 1,2-bis ((difluorophosphinyl)oxy) ethane, trimethyl phosphate, triphenyl phosphate, triisopropyl phosphate, 3,3,3-trifluoroethyl phosphate, 3,3,3-trifluoroethyl phosphite, tris(trimethylsilane) phosphate, or 1-propyl phosphate anhydride; and
based on a total weight of the electrolyte, a mass percentage of the fifth composition is E%, and 0.05≤E≤3.

11. An electrochemical apparatus, comprising the electrolyte according to any one of claims 1 to 10.

12. An electronic apparatus, comprising the electrochemical apparatus according to claim 11.
